# EUROPÄISCHE PATENTSCHRIFT

(11) **EP 3 987 335 B1**
(45) Veröffentlichungstag und Bekanntmachung des Hinweises auf die Patenterteilung: **07.06.2023**
(21) Anmeldenummer: 20734849.1
(22) Anmeldetag: 16.06.2020
(51) Int. Cl.: G02B 21/00, G02B 27/62, G02B 7/00

(54) **VERFAHREN UND VORRICHTUNGEN ZUR ÜBERPRÜFUNG DER KONFOKALITÄT EINER SCANNENDEN UND ENTSCANNENDEN MIKROSKOPBAUGRUPPE**
METHODS AND APPARATUSES FOR CHECKING THE CONFOCALITY OF A SCANNING AND DESCANNING MICROSCOPE ASSEMBLY
PROCÉDÉ ET DISPOSITIFS POUR TESTER LA CONFOCALITÉ D'UN MODULE DE BALAYAGE ET DE DÉBALAYAGE D'UN MICROSCOPE

(30) Priorität: 19.06.2019 DE 102019116626
(43) Veröffentlichungstag der Anmeldung: 27.04.2022
(73) Patentinhaber: Abberior Instruments GmbH, 37077 Göttingen (DE)
(72) Erfinder: FISCHER, Joachim, 76228 Karlsruhe (DE); HENRICH, Matthias, 69115 Heidelberg (DE)
(74) Vertreter: REHBERG HÜPPE + PARTNER
(86) Internationale Anmeldenummer: PCT/EP2020/066589
(87) Internationale Veröffentlichungsnummer: WO 2020/254303

(56) Entgegenhaltungen:
- EP-A1- 2 098 892
- EP-A1- 2 333 501
- WO-A2-99/42885
- JP-A- H06 109 958
- JP-B2- 4 573 524

## Beschreibung

### TECHNISCHES GEBIET DER ERFINDUNG

Die Erfindung bezieht sich auf ein Verfahren zur Überprüfung der Konfokalität einer scannenden und entscannenden Mikroskopbaugruppe mit einer Beleuchtungslicht bereitstellenden Lichtquelle, einer das Beleuchtungslicht in einen Fokusbereich in einer Fokusebene fokussierenden Optik, einem Licht aus dem Fokusbereich detektierenden Detektor, der eine konfokal zu dem Fokusbereich anzuordnende Detektionsapertur aufweist, und einem Scanner zwischen der Lichtquelle und dem Detektor einerseits und der Fokusebene andererseits. Weiterhin bezieht sich die Erfindung auf eine Vorrichtung sowie auf eine scannende und entscannende Mikroskopbaugruppe zur Durchführung eines solchen Verfahrens und auf ein Laserscanningmikroskop mit einer solchen scannenden und entscannenden Mikroskopbaugruppe. Entsprechend handelt es sich bei der scannenden und entscannenden Mikroskopbaugruppe insbesondere um eine solche für ein Laserscanningmikroskop. Die Detektionsapertur des Detektors kann dabei insbesondere durch eine vor dem Detektor angeordnete und dann konfokal zu dem Fokusbereich anzuordnende Lochblende begrenzt sein. Die Detektionsapertur kann aber auch durch einen oder mehrere lichtempfindliche Bereiche des Detektors definiert sein.

Bei einer scannenden und entscannenden Mikroskopbaugruppe mit einer Beleuchtungslicht bereitstellenden Lichtquelle, einer das Beleuchtungslicht in einen Fokusbereich in einer Fokusebene fokussierenden Optik, einem Detektor für Licht aus dem Fokusbereich, der eine konfokal zu dem Fokusbereich anzuordnende Detektionsapertur aufweist, und einem Scanner zwischen der Lichtquelle und dem Detektor mit der Lochblende einerseits und der Fokusebene andererseits, so dass der Scanner zum Scannen mit dem fokussierten Beleuchtungslicht von der Lichtquelle einerseits und zum Entscannen des Lichts aus dem Fokusbereich zu dem Detektor mit der Lochblende andererseits ausgebildet ist, ist eine genau konfokale Anordnung der Detektionsapertur wichtig, um das mit dem Beleuchtungslicht hervorgerufene Licht optimal zu messen. Dabei bedeutet die genau konfokale Anordnung der Detektionsapertur, dass sie bei ihrer Abbildung in die Fokusebene konzentrisch zu dem Fokusbereich angeordnet ist, in den das Beleuchtungslicht fokussiert wird.

### STAND DER TECHNIK

Aus der WO 2018 / 042 056 A1 sind ein Verfahren zum Justieren eines Laserscanning-Fluoreszenzmikroskops und ein entsprechendes Laserscanning-Fluoreszenzmikroskop mit einer automatischen Justiervorrichtung bekannt. Dabei geht um das Einstellen einer korrekten Justierung des Laserscanning-Fluoreszenzmikroskops, in der ein Intensitätsmaximum von Anregungslicht und eine Abbildung einer vor einem Fluoreszenzlichtdetektor angeordneten Lochblende im Fokus eines Objektivs zusammenfallen. Bei dem bekannten Verfahren wird eine mit einem Fluoreszenzfarbstoff markierte Struktur in einer Probe mit dem Intensitätsmaximum des Anregungslichts abgetastet, um Bilder der Probe mit Abbildern der Struktur zu erzeugen, die verschiedenen Blendenöffnungen der Lochblende entsprechen. Dann wird ein Versatz zwischen den Lagen der Abbilder der Struktur in den erzeugten Bildern berechnet. Zum Einstellen der korrekten Justierung des Laserscanning-Fluoreszenzmikroskops wird das Intensitätsmaximum des Anregungslichts relativ zu der Abbildung der Lochblende in der Richtung des Versatzes verlagert, den das Abbild der Struktur in einem Bild, das einer kleineren Blendenöffnung der Lochblende entspricht, gegenüber dem Abbild der Struktur in einem anderen Bild aufweist, das einer größeren Blendenöffnung der Lochblende entspricht. Die automatische Justiervorrichtung des bekannten Laserscanning-Fluoreszenzmikroskops ist dazu ausgebildet, das bekannte Verfahren automatisch durchzuführen. Das bekannte Verfahren setzt das Vorhandensein des vollständigen Laserscanning-Fluoreszenzmikroskops und die mit dem Fluoreszenzfarbstoff markierte Struktur in der Probe voraus, um die Bilder der Probe mit den Abbildern der Struktur zu erzeugen. Darüber hinaus muss die Blendenöffnung der Lochblende variabel oder zumindest die Lochblende entfernbar sein, um die Bilder zu erzeugen, die unterschiedlichen Blendenöffnungen der Lochblende entsprechen.

Aus der DE 10 2005 020 542 1 sind eine Vorrichtung und Verfahren zum Einstellen der Lage und/oder Größe einer Lochblende in einem Laserscanningmikroskop bekannt. Über eine separate Lichtquelle oder den Laser des Laserscanningmikroskops wird die Lochblende beleuchtet und die Lochblende quer zur optischen Achse verlagert, bis ein Intensitätsmaximum auf dem hinter der Lochblende angeordneten Detektor des Laserscanningmikroskops vorliegt. Dann befindet sich die Öffnung der Lochblende an einem Punkt, der durch den optischen Aufbau des Laserscanningmikroskops gegenüber der separaten Lichtquelle oder dem Laser definiert ist und der reproduzierbar aufgefunden werden kann. Eine Konfokalität des Laserscanningmikroskops ist damit nicht überprüfbar oder einstellbar. Die bekannte Vorrichtung ist bei dem Laserscanningmikroskop vollständig auf derselben Seite des Scanners angeordnet, wie der Laser und der Detektor des Laserscanningmikroskops.

Aus der WO 2011 / 047 365 A1 ist eine Autofokusvorrichtung mit einer Lichtquelle, einem Strahlteiler, einem faseroptischen Zirkulator, einem optischen Kollimator, einem vergleichenden Detektor und einen Mikroprozessor bekannt. Der Strahlteiler teilt Licht von der Lichtquelle in zwei Teile. Der faseroptische Zirkulator ist mit einem ersten Anschluss an den Strahlteiler, mit einem zweiten Anschluss an den optischen Kollimator und mit einem dritten Anschluss an den vergleichenden Detektor angeschlossen. Der optische Kollimator richtet den einen Teil des Lichts von dem faseroptischen Zirkulator über einen dichroitischen Spiegel und ein Mikroskopobjektiv auf eine Probe. Der vergleichende Detektor verwendet den anderen Teil des Lichts von der Lichtquelle als Referenz und wandelt Licht von einem Substrat, auf dem die Probe angeordnet ist, in ein analoges Spannungssignal. Basierend auf dem analogen Spannungssignal des Vergleichsdetektors steuert der Mikroprozessor einen Mikroskopprobentisch. In dem faseroptischen Zirkulator wird Licht ausschließlich von dem ersten Eingang zu dem zweiten Eingang und von dem zweiten Eingang zu dem dritten Eingang weitergeleitet. Der vergleichende Detektor teilt das von dem Substrat reflektierte Signal durch den Teil des Lichts von der Lichtquelle, um Variationen der Intensität des Lichts von der Lichtquelle auszugleichen. Der Mikroprozessor steuert den Mikroskopprobentisch mit dem Ziel an, das analoge Spannungssignal von dem Vergleichsdetektor zu maximieren oder maximal zu halten.

Ein Verfahren und eine Vorrichtung zum Kalibrieren eines konfokalen Laserscanningmikroskops mit einer Beleuchtungslicht bereitstellenden Lichtquelle, einer das Beleuchtungslicht in einen Fokusbereich in einer Fokusebene fokussierenden Optik, einem Licht aus dem Fokusbereich detektierenden Detektor, der eine konfokal zu dem Fokusbereich anzuordnende Detektionsapertur aufweist, und einem Scanner zwischen der Lichtquelle und dem Detektor einerseits und der Fokusebene andererseits, bei denen das Beleuchtungslicht über den Scanner auf einen Hilfsdetektor und Hilfslicht von einer Hilfslichtquelle über den Scanner auf den Detektor gerichtet wird, ohne dass das Kalibrieren aber die Konfokalität einer scannenden und entscannenden Mikroskopbaugruppe betrifft, sind aus der DE 199 06 763 A1 bekannt. Von dem Laserscanningmikroskop wird ein Objekt mit einem Lichtstrahl abgetastet. Für das Kalibrieren sind in einer Ebene einer Zwischenabbildung Kalibriermittel angeordnet, die ebenfalls mit dem Lichtstrahl abtastbar sind. Die Kalibriermittel können Messmittel sein, die als Detektionsmittel ausgeführt sind und zur Laserleistungsmessung oder Laserkalibrierung dienen. Bei den Detektionsmitteln kann es sich um Photodioden handeln. Die Kalibriermittel können auch Leuchtmittel sein, die zur Kalibrierung der Detektoren dienen. Bei den Leuchtmitteln kann es sich um Leuchtdioden handeln. Die Kalibriermittel können in der Ebene der Zwischenabbildung in den Bereich des Bildfelds einschwenkbar sein oder am Rand der Zwischenabbildung außerhalb des eigentlichen Bildfelds fest angeordnet sein.

Aus der WO 99 / 428 85 A2 ist eine Anordnung zum Kalibrieren eines vorzugsweise konfokalen Laserscanmikroskops bekannt, das ein Objekt mit einem Laserstrahl abtastet. Die Anordnung umfasst in der Ebene einer Zwischenabbildung des Laserscanmikroskops angeordnete Kalibriermittel, die ebenfalls mit dem Scanstrahl abtastbar sind. Die Kalibriermittel können in den Bereich des Bildfelds einschwenkbar sein oder außerhalb des eigentlichen Bildfelds angeordnet sein. Die Kalibriermittel können Messmittel sein, die als Detektionsmittel zur Laserleistungsmessung und Laserkalibrierung dienen. Bei dem Detektionsmittel kann es sich Photodioden handeln. Die Kalibriermittel können alternativ Referenzstrukturen sein. Die Referenzstrukturen können als Leuchtmittel ausgeführt sein, bei denen es sich um Leuchtdioden handeln kann.

### AUFGABE DER ERFINDUNG

Der Erfindung liegt die Aufgabe zugrunde, ein Verfahren und Vorrichtungen aufzuzeigen, die eine Überprüfung der Konfokalität einer scannenden und entscannenden Mikroskopbaugruppe ermöglichen, ohne dass ein vollständiges, die Mikroskopbaugruppe umfassendes Laserscanningmikroskop vorhanden oder eine Probe mit einem solchen Laserscanningmikroskop gemessen werden muss.

### LÖSUNG

Die Aufgabe der Erfindung wird durch ein Verfahren mit den Merkmalen des unabhängigen Patentanspruchs 1, eine Vorrichtung mit den Merkmalen des Anspruchs 8, eine scannende und entscannende Mikroskopbaugruppe mit den Merkmalen des Anspruchs 9 und ein Laserscanningmikroskop mit den Merkmalen des Anspruchs 14 gelöst. Die weiteren abhängigen Ansprüche betreffen bevorzugte Ausführungsformen des Verfahrens, der Vorrichtung, der Mikroskopbaugruppe und des Laserscanningmikroskops.

### BESCHREIBUNG DER ERFINDUNG

Das erfindungsgemäße Verfahren dient zur Überprüfung der Konfokalität einer scannenden und entscannenden Mikroskopbaugruppe mit einer Beleuchtungslicht bereitstellenden Lichtquelle, wobei das Beleuchtungslicht aus einer Emissionsapertur der Lichtquelle austritt, einer das Beleuchtungslicht in einen Fokusbereich in einer Fokusebene fokussierenden Optik, einem Licht aus dem Fokusbereich detektierenden Detektor, der eine konfokal zu dem Fokusbereich anzuordnende Detektionsapertur aufweist, und einem Scanner zwischen der Lichtquelle und dem Detektor mit der Lochblende einerseits, d. h. auf der einen Seite des Scanners, und der Fokusebene andererseits, d. h. auf der anderen Seite des Scanners. Dazu ist festzustellen, dass das Licht, das mit dem Detektor detektiert wird, nicht aus dem Fokusbereich in der betrachteten Fokusebene heraus emittiert werden muss, sondern auch aus einer anderen Ebene stammen kann. Dass die Detektionsapertur des Detektors konfokal zu dem Fokusbereich "anzuordnen" ist, definiert keinen zwingenden Schritt des erfindungsgemäßen Verfahrens, sondern nur, dass die Detektionsapertur des Detektors bei gegebener Konfokalität der scannenden und entscannenden Mikroskopbaugruppe konfokal zu dem Fokusbereich angeordnet ist.

Bei dem erfindungsgemäßen Verfahren sind/ist ein Hilfsdetektor mit einer Detektionshilfsapertur und/oder eine Hilfslicht bereitstellende Hilfslichtquelle mit einer Emissionshilfsapertur, aus der das Hilfslicht austritt, in der Fokusebene angeordnet. Mindestens ist der Hilfsdetektor oder die Hilfslichtquelle in der Fokusebene angeordnet. Wenn dort der Hilfsdetektor und die Hilfslichtquelle angeordnet sind, sind die Detektionshilfsapertur und die Emissionshilfsapertur in der Fokusebene konzentrisch angeordnet. Zur Erfüllung dieses Merkmals des erfindungsgemäßen Verfahrens kann es erforderlich sein, den Hilfsdetektor und/oder die Hilfslichtquelle aktiv in der Fokusebene anzuordnen. Es ist aber auch dann erfüllt, wenn die auf Konfokalität zu überprüfende scannende und entscannende Mikroskopbaugruppe den Hilfsdetektor und/oder die Hilfslichtquelle bereits in der Fokusebene aufweist.

Bei dem erfindungsgemäßen Verfahren wird die in der Fokusebene angeordnete Detektionshilfsapertur des Hilfsdetektors durch Verstellen des Scanners mit dem Fokusbereich des Beleuchtungslichts abgetastet, wobei eine erste Intensitätsverteilung des von dem Hilfsdetektor registrierten Beleuchtungslichts über verschiedene Stellungen des Scanners hinweg erfasst wird. Alternativ wird eine konzentrisch zu der Emissionsapertur der Lichtquelle angeordnete Detektionshilfsapertur eines separaten Hilfsdetektors durch Verstellen des Scanners mit dem Hilfslicht, das durch die in der Fokusebene angeordnete Emissionshilfsapertur der Hilfslichtquelle austritt, abgetastet, wobei eine erste Intensitätsverteilung des von dem separaten Hilfsdetektor registrierten Beleuchtungslichts über verschiedene Stellungen des Scanners hinweg erfasst wird. Die erste Intensitätsverteilung beschreibt in beiden Fällen die Anordnung der Emissionsapertur der Lichtquelle und damit des Beleuchtungslichts gegenüber der in der Fokusebene angeordneten Hilfseinrichtung, das ist der Hilfsdetektor oder die Hilfslichtquelle.

Weiterhin wird die Detektionsapertur des Detektors durch Verstellen des Scanners mit dem Hilfslicht, das durch die in der Fokusebene angeordnete Emissionshilfsapertur der Hilfslichtquelle austritt, abgetastet, wobei eine zweite Intensitätsverteilung des von dem Detektor registrierten Hilfslichts über die Stellungen des Scanners hinweg erfasst wird. Alternativ wird hier die in der Fokusebene angeordnete Detektionshilfsapertur des Hilfsdetektors durch Verstellen des Scanners mit Hilfslicht, das durch eine konzentrisch zu der Detektionsapertur angeordnete Emissionshilfsapertur einer separaten Hilfslichtquelle austritt, abgetastet, wobei eine zweite Intensitätsverteilung des von dem Hilfsdetektor registrierten Hilfslichts über die Stellungen des Scanners hinweg erfasst wird. Die zweite Intensitätsverteilung beschreibt in beiden Fällen die Anordnung der Detektionsapertur des Detektors gegenüber der in der Fokusebene angeordneten Hilfseinrichtung, das ist die Hilfslichtquelle oder der Hilfsdetektor.

Dann wird mindestens ein Unterschied zwischen der ersten Intensitätsverteilung und der zweiten Intensitätsverteilung über die verschiedenen Stellungen des Scanners hinweg als Maß für einen Fehler der Konfokalität erfasst.

Es versteht sich, dass die beiden Intensitätsverteilungen zur Erfassung des Unterschieds über vergleichbare und typischerweise dieselben Stellungen des Scanners hinweg erfasst werden.

Dann deutet ein Lageunterschied zwischen Maxima oder Schwerpunkten der beiden Intensitätsverteilungen bezogen auf diese Stellungen des Scanners unmittelbar auf einen Fehler der Konfokalität der Mikroskopbaugruppe hin, d. h. auf einen Versatz zwischen dem Fokusbereich, in den das Beleuchtungslicht mit der fokussierenden Optik in die Fokusebene fokussiert wird, und dem Abbild der Detektionsapertur des Detektors in die Fokusebene oder dem Abbild des Fokusbereichs, in den das Beleuchtungslicht mit der fokussierenden Optik fokussiert wird, auf die Detektionsapertur. Entsprechend ist der mindestens eine Unterschied, der bei dem erfindungsgemäßen Verfahren vorzugsweise erfasst wird, der Lageunterschied zwischen Maxima oder Schwerpunkten der beiden Intensitätsverteilungen.

Um die Konfokalität der Mikroskopbaugruppe herzustellen, wird der mindestens eine Unterschied kompensiert. Dies kann durch eine reale Relativverschiebung der Detektionsapertur des Detektors gegenüber der Emissionsapertur der Lichtquelle geschehen, die durch ein Verschieben einer Lochblende vor dem Detektor oder auch durch eine Verlagerung der Lichtquelle gegenüber dem Detektor erreicht werden kann, oder durch eine virtuelle Relativverlagerung. Eine virtuelle Relativverlagerung wird zum Beispiel durch Verschwenken eines Spiegels oder durch eine andere Bewegung eines anderen optischen Bauteils im Strahlengang des Beleuchtungslichts von der Lichtquelle oder des Lichts aus dem Fokusbereich zu dem Detektor bewirkt.

Wenn das erfindungsgemäße Verfahren an einem die scannende und entscannende Mikroskopbaugruppe sowie ein Objektiv umfassenden Laserscanningmikroskop durchgeführt wird, können die Detektionshilfsapertur des Hilfsdetektors und/oder die Emissionshilfsapertur der Hilfslichtquelle in einer Zwischenbildebene des Laserscanningmikroskops angeordnet werden. Sie können dabei in einem Bereich der jeweiligen Zwischenbildebene angeordnet werden, der außerhalb des Bereichs liegt, der beim Abtasten eines Objekts mit dem Beleuchtungslicht durch das Objektiv des Laserscanningmikroskops ausgenutzt wird. Alternativ können die Detektionshilfsapertur des Hilfsdetektors und/oder die Emissionshilfsapertur der Hilfslichtquelle in einem Abzweig von einem Hauptstrahlengang eines die scannende und entscannende Mikroskopbaugruppe und ein Objektiv umfassenden Laserscanningmikroskops angeordnet werden, wobei dieser Abzweig auch grundsätzlich nicht zu dem mit dem Laserscanningmikroskop untersuchten Objekt führt. Dieser Abzweig kann konkret an einem Strahlteiler im Hauptstrahlengang des Laserscanningmikroskops, an einem Umlenkspiegel, der stationär oder instationär in dem Hauptstrahlengang angeordnet wird, oder an einem Drehspiegel des Scanners abgezweigt werden. Die Scanner verschiedener Laserscanningmikroskope verfügen über drei oder vier verschwenkbare Drehspiegel, wobei einer oder beiden seitlichen Scanrichtungen zwei Drehspiegel zugeordnet sind. Einer dieser Drehspiegel je Scanrichtung kann dazu genutzt werden, den Scanner grundsätzlich auf die Detektionshilfsapertur und/oder die Emissionshilfsapertur auszurichten. Mit dem jeweils anderen Spiegel kann das Abtasten der Detektionshilfsapertur des jeweiligen Hilfsdetektors bzw. der Detektionsapertur des Detektors vollzogen werden. Aber auch viele Scanner mit nur einem Drehspiegel je Scanrichtung können zum Abtasten der Detektionshilfsapertur des Hilfsdetektors in dem Abzweig von dem Hauptstrahlengang des Laserscanningmikroskops und zum Abtasten der Detektionsapertur des Detektors mit dem Hilfslicht von der Hilfslichtquelle in dem Hauptstrahlengang genutzt werden. Wenn also ein geeigneter Scanner vorhanden ist, reicht zur Umsetzung des erfindungsgemäßen Verfahrens im einfachsten Fall ein sowohl als Hilfslichtquelle als auch als Hilfsdetektor verwendbares photoelektrisches Bauteil aus.

Zusätzlich kann in dem Abzweig von dem Hauptstrahlengang des Laserscanningmikroskops zumindest ein Teil der das Beleuchtungslicht in den Fokusbereich in der Fokusebene fokussierenden Optik angeordnet werden. In diesem Zusammenhang ist festzuhalten, dass dann, wenn die Detektionshilfsapertur des Hilfsdetektors und die Emissionshilfsapertur der Hilfslichtquelle bei dem erfindungsgemäßen Verfahren konzentrisch in der Fokusebene angeordnet werden, dies nicht zwingend bedeutet, dass die Hilfslichtquelle und der Hilfsdetektor auch real in derselben Fokusebene angeordnet werden müssen. Vielmehr können die Detektionshilfsapertur und/oder die Emissionshilfsapertur auch dadurch in der Fokusebene angeordnet werden, dass die Hilfslichtquelle und/oder der Hilfsdetektor dorthin abgebildet werden/wird. Zudem muss die Fokusebene, in der die Detektionshilfsapertur und/oder die Emissionshilfsapertur angeordnet werden, nicht identisch mit irgendeiner Zwischenbildebene des Laserscanningmikroskops sein, über die das Beleuchtungslicht von der Lichtquelle durch das Objektiv zu einem zu untersuchenden Objekt und durch das Beleuchtungslicht hervorgerufenes Licht von dem Objekt durch das Objektiv zu dem Detektor gelangt. Vielmehr kann die Fokusebene, in der die Detektionshilfsapertur und/oder die Emissionshilfsapertur angeordnet werden, zu jeder Zwischenbildebene des Laserscanningmikroskops versetzt und/oder verkippt sein. In einer ersten Ausführungsform des erfindungsgemäßen Verfahrens wird die in der Fokusebene angeordnete Detektionshilfsapertur des Hilfsdetektors durch das Verstellen des Scanners mit dem Fokusbereich des Beleuchtungslichts abgetastet, um die erste Intensitätsverteilung des von dem Hilfsdetektor registrierten Beleuchtungslichts über die verschiedenen Stellungen des Scanners hinweg zu erfassen. Weiterhin wird die Detektionsapertur des Detektors durch das Verstellen des Scanners mit dem Hilfslicht von der Hilfslichtquelle, das durch die konzentrisch zu der Detektionshilfsapertur in der Fokusebene angeordnete Emissionshilfsapertur der Hilfslichtquelle austritt, abgetastet, um die zweite Intensitätsverteilung des von dem Detektor registrierten Hilfslichts über die Stellungen des Scanners hinweg zu erfassen.

Bei der ersten Ausführungsform des erfindungsgemäßen Verfahrens können die Detektionshilfsapertur und die Emissionshilfsapertur in der Fokusebene nicht nur konzentrisch, sondern auch deckungsgleich sein. Eine Deckungsgleichheit kann zum Beispiel dadurch bewirkt werden, das als die Hilfslichtquelle und als der Hilfsdetektor dasselbe photoelektrische Bauteil verwendet wird. Konkret kann dieses photoelektrische Bauteil eine Leuchtdiode, eine Superlumineszenzdiode, eine Laserdiode oder eine Photodiode sein. Dass diese photoelektrischen Bauteile so ansteuerbar sind bzw. verschaltet werden können, dass sie einerseits als Lichtquelle und andererseits als Detektor für Licht nutzbar sind, ist dem Fachmann grundsätzlich bekannt.

Bei der ersten Ausführungsform des erfindungsgemäßen Verfahrens können die Detektionshilfsapertur und die Emissionshilfsapertur auch mit einem in der Fokusebene angeordneten Endquerschnitt eines Lichtleiters ausgebildet werden. Dieser Lichtleiter kann grundsätzlich auch zu einem photoelektrischen Bauteil führen, das sowohl als Hilfslichtquelle als auch als Hilfsdetektor verwendet wird. Der Lichtleiter kann aber auch über einen Freistrahl-Strahlteiler, einen Faserstrahlteiler oder einen Zirkulator zu der Hilfslichtquelle und dem Hilfsdetektor hin verzweigt sein. Dann können problemlos separate photoelektrische Bauteile für die Hilfslichtquelle und den Hilfsdetektor verwendet werden. Bei Verwendung eines Zirkulators wird dabei ohne zusätzlichen Aufwand vermieden, dass nur ein Teil des über den Endquerschnitt in den Lichtleiter eintretenden Beleuchtungslichts zu dem Hilfsdetektor gelangt oder nur ein Teil des Hilfslichts von der Hilfslichtquelle über den Endquerschnitt aus dem Lichtleiter austritt.

In einer zweiten Ausführungsform des erfindungsgemäßen Verfahrens wird die in der Fokusebene angeordnete Detektionshilfsapertur des Hilfsdetektors wie bei der ersten Ausführungsform durch das Verstellen des Scanners mit dem Fokusbereich des Beleuchtungslichts abgetastet, um die erste Intensitätsverteilung des von dem Hilfsdetektor registrierten Beleuchtungslichts über die verschiedenen Stellungen des Scanners hinweg zu erfassen. Abweichend von der ersten Ausführungsform wird aber die in der Fokusebene angeordnete Detektionshilfsapertur des Hilfsdetektors durch das Verstellen des Scanners mit dem Hilfslicht, das durch die konzentrisch zu der Detektionsapertur angeordnete Emissionshilfsapertur der separaten Hilfslichtquelle austritt, abgetastet, um die zweite Intensitätsverteilung des von dem Hilfsdetektor registrierten Hilfslichts über die Stellungen des Scanners hinweg zu erfassen. Der Detektionsstrahlengang wird bei der zweiten Ausführungsform des erfindungsgemäßen Verfahrens also von dem Hilfslicht in einer Richtung durchstrahlt, die der Richtung des von dem Detektor normalerweise detektierten Lichts aus der Fokusebene entgegen gesetzt ist. Dennoch beschreibt auch hier die zweite Intensitätsverteilung die Anordnung der Detektionsapertur des Detektors - in Form der Anordnung der dazu konzentrischen Emissionshilfsapertur der Hilfslichtquelle - gegenüber der Hilfseinrichtung - in Form des Hilfsdetektors - in der Fokusebene.

In einer dritten Ausführungsform des erfindungsgemäßen Verfahrens wird abweichend von der ersten Ausführungsform die konzentrisch zu der Emissionsapertur der Lichtquelle angeordnete Detektionshilfsapertur des separaten Hilfsdetektors durch das Verstellen des Scanners mit dem Hilfslicht, das durch die in der Fokusebene angeordnete Emissionshilfsapertur der Hilfslichtquelle austritt, abgetastet, um die erste Intensitätsverteilung des von dem Hilfsdetektor registrierten Beleuchtungslichts über die verschiedenen Stellungen des Scanners hinweg zu erfassen. Hingegen wird die Detektionsapertur des Detektors wie bei der ersten Ausführungsform durch das Verstellen des Scanners mit dem Hilfslicht, das durch die in der Fokusebene angeordnete Emissionshilfsapertur der Hilfslichtquelle austritt, abgetastet, um die zweite Intensitätsverteilung des von dem Detektor registrierten Hilfslichts über die Stellungen des Scanners hinweg zu erfassen. Hier beschreibt die erste Intensitätsverteilung die Anordnung der Emissionsapertur der Lichtquelle - in Form der Anordnung der dazu konzentrischen Detektionshilfsapertur des Hilfsdetektors - gegenüber der Hilfseinrichtung - in Form der Hilfslichtquelle - in der Fokusebene.

Grundsätzlich ist auch noch eine vierte Ausführungsform des erfindungsgemäßen Verfahrens möglich, bei der abweichend von der ersten Ausführungsform die konzentrisch zu der Emissionsapertur der Lichtquelle angeordnete Detektionshilfsapertur des separaten Hilfsdetektors durch das Verstellen des Scanners mit dem Hilfslicht, das durch die in der Fokusebene angeordnete Emissionshilfsapertur der Hilfslichtquelle austritt, abgetastet wird, um die erste Intensitätsverteilung des von dem Hilfsdetektor registrierten Beleuchtungslichts über die verschiedenen Stellungen des Scanners hinweg zu erfassen, und bei der ebenfalls abweichend von der ersten Ausführungsform die in der Fokusebene angeordnete Detektionshilfsapertur des Hilfsdetektors durch das Verstellen des Scanners mit dem Hilfslicht, das durch die konzentrisch zu der Detektionsapertur angeordnete Emissionshilfsapertur der separaten Hilfslichtquelle austritt, abgetastet wird, um die zweite Intensitätsverteilung des von dem Hilfsdetektor registrierten Hilfslichts über die Stellungen des Scanners hinweg zu erfassen.

Zur Durchführung der ersten Ausführungsform des erfindungsgemäßen Verfahrens kann eine Vorrichtung mit einem Hilfsdetektor und einer Hilfslichtquelle verwendet werden, die einen zu einem genormten Anschluss der scannenden und entscannenden Mikroskopbaugruppe oder einem solchen genormten Anschluss eines die scannende und entscannende Mikroskopbaugruppe und ein Objektiv umfassenden Laserscanningmikroskop derart passenden Gegenanschluss aufweist, dass eine Detektionshilfsapertur des Hilfsdetektors und eine Emissionshilfsapertur der Hilfslichtquelle, deren Lagen gegenüber dem Gegenanschluss fest sind, bei an den Anschluss angeschlossenem Gegenanschluss in der Fokusebene der scannenden und entscannenden Mikroskopbaugruppe angeordnet sind. Diese Vorrichtung kann dann an die jeweilige Mikroskopbaugruppe oder das jeweilige Laserscanningmikroskop über deren bzw. dessen genormten Anschluss angeschlossen werden, um die Mikroskopbaugruppe und damit ggf. auch das gesamte Laserscanningmikroskop auf seine Konfokalität hin zu überprüfen.

Die erfindungsgemäße Vorrichtung besteht im Extremfall ausschließlich aus dem Gegenanschluss und einem in fester Relativlage dazu angeordneten elektrooptischen Bauteil, das sowohl als Hilfsdetektor als auch als Hilfslichtquelle verwendbar ist, und der zugehörigen Schaltung zur Ansteuerung dieses Bauteils als Hilfsdetektor einerseits und als Hilfslichtquelle andererseits.

Bei der Durchführung aller Ausführungsformen des erfindungsgemäßen Verfahrens können der Hilfsdetektor und die Hilfslichtquelle in die scannende und entscannende Mikroskopbaugruppe integriert sein. Eine entsprechende erfindungsgemäße scannende und entscannende Mikroskopbaugruppe zur Durchführung des erfindungsgemäßen Verfahrens weist eine Beleuchtungslicht bereitstellende Lichtquelle, wobei das Beleuchtungslicht aus einer Emissionsapertur der Lichtquelle austritt, eine das Beleuchtungslicht in einen Fokusbereich in einer Fokusebene fokussierende Optik, einen Detektor für Licht aus dem Fokusbereich, der eine konfokal zu dem Fokusbereich anzuordnende Detektionsapertur aufweist, einen Scanner zwischen der Lichtquelle und dem Detektor einerseits und der Fokusebene andererseits, und in der Fokusebene einen Hilfsdetektor mit einer Detektionshilfsapertur und/oder eine Hilfslicht bereitstellende Hilfslichtquelle mit einer Emissionshilfsapertur, aus der das Hilfslicht austritt, auf.

Dabei sind dann, wenn der Hilfsdetektor und die Hilfslichtquelle in der Fokusebene angeordnet sind, die Detektionshilfsapertur und die Emissionshilfsapertur konzentrisch angeordnet. Durch Verstellen des Scanners ist die Detektionshilfsapertur des Hilfsdetektors in der Fokusebene mit dem Fokusbereich des Beleuchtungslichts oder eine konzentrisch zu der Emissionsapertur der Lichtquelle angeordnete Detektionshilfsapertur eines separaten Hilfsdetektors mit dem Hilfslicht, das durch die in der Fokusebene angeordnete Emissionshilfsapertur der Hilfslichtquelle austritt, abtastbar. Weiterhin ist durch Verstellen des Scanners die Detektionsapertur des Detektors mit dem Hilfslicht, das in der Fokusebene aus der Emissionshilfsapertur der Hilfslichtquelle austritt, oder die in der Fokusebene angeordnete Detektionshilfsapertur des Hilfsdetektors mit Hilfslicht, das durch eine konzentrisch zu der Detektionsapertur angeordnete Emissionshilfsapertur einer separaten Hilfslichtquelle austritt, abtastbar.

Vorzugsweise weist eine erfindungsgemäße Mikroskopbaugruppe eine Überprüfungseinrichtung auf, die dazu ausgebildet ist, durch Verstellen des Scanners die Detektionshilfsapertur des Hilfsdetektors in der Fokusebene mit dem Fokusbereich des Beleuchtungslichts oder die konzentrisch zu der Emissionsapertur der Lichtquelle angeordnete Detektionshilfsapertur des separaten Hilfsdetektors mit dem Hilfslicht von der Hilfslichtquelle in der Fokusebene abzutasten und eine erste Intensitätsverteilung des von dem Hilfsdetektor registrierten Beleuchtungslichts oder des von dem separaten Hilfsdetektor registrierten Hilfslichts über verschiedene Stellungen des Scanners hinweg zu erfassen, die weiterhin dazu ausgebildet ist, durch Verstellen des Scanners die Detektionsapertur des Detektors mit dem Hilfslicht von der Hilfslichtquelle in der Fokusebene oder die in der Fokusebene angeordnete Detektionshilfsapertur des Hilfsdetektors mit dem aus der konzentrisch zu der Detektionsapertur des Detektors angeordneten Emissionshilfsapertur der separaten Hilfslichtquelle austretenden Hilfslicht abzutasten und eine zweite Intensitätsverteilung des von dem Detektor registrierten Hilfslichts oder des von dem Hilfsdetektor registrierten Hilfslichts über die Stellungen des Scanners hinweg zu erfassen, und die zudem dazu ausgebildet ist, mindestens einen Unterschied zwischen der ersten Intensitätsverteilung und der zweiten Intensitätsverteilung über die verschiedenen Stellungen des Scanners hinweg als Maß für einen Fehler der Konfokalität der Mikroskopbaugruppe zu erfassen.

Bei einer erfindungsgemäßen scannenden und entscannenden Mikroskopbaugruppe zur Durchführung der ersten Ausführungsform des erfindungsgemäßen Verfahrens mit der das Beleuchtungslicht bereitstellenden Lichtquelle, dem das Beleuchtungslicht in den Fokusbereich in der Fokusebene fokussierenden Optik, dem Detektor für das Licht aus dem Fokusbereich, der die konfokal zu dem Fokusbereich anzuordnende Detektionsapertur aufweist, und dem Scanner zwischen der Lichtquelle und dem Detektor einerseits und der Fokusebene andererseits sind die Detektionshilfsapertur des Hilfsdetektors, auf die das Beleuchtungslicht über den Scanner richtbar ist, und die Emissionshilfsapertur der Hilfslichtquelle, durch die das Hilfslicht von der Hilfslichtquelle austritt, das über den Scanner auf die Detektionsapertur des Detektors richtbar ist, konzentrisch in der Fokusebene angeordnet, und zwar derart, dass die Detektionshilfsapertur durch Verstellen des Scanners mit dem Fokusbereich des Beleuchtungslichts abtastbar ist und die Detektionsapertur des Detektors durch Verstellen des Scanners mit dem Hilfslicht von der Hilfslichtquelle abtastbar ist. Dazu ist der Scanner zwischen der Lichtquelle und dem Detektor einerseits, so dass diese auf der einen Seite des Scanners liegen, und dem Hilfsdetektor und der Hilfslichtquelle andererseits, so dass diese auf der anderen Seite des Scanners liegen, anzuordnen. Auch hier ist noch einmal darauf hinzuweisen, dass diese Anordnung ansonsten real oder virtuell sein kann, wie bereits oben im Zusammenhang mit dem erfindungsgemäßen Verfahren dargelegt wurde.

Eine erfindungsgemäße scannende und entscannende Mikroskopbaugruppe zur Durchführung der zweiten Ausführungsform des erfindungsgemäßen Verfahrens weist die das Beleuchtungslicht bereitstellende Lichtquelle, die das Beleuchtungslicht in den Fokusbereich in der Fokusebene fokussierende Optik, den Detektor für das Licht aus dem Fokusbereich, der die konfokal zu dem Fokusbereich anzuordnende Detektionsapertur aufweist, den Scanner zwischen der Lichtquelle und dem Detektor einerseits und der Fokusebene andererseits, und den Hilfsdetektor auf, auf den das Beleuchtungslicht über den Scanner richtbar ist. Dabei ist die Detektionshilfsapertur des Hilfsdetektors derart in der Fokusebene angeordnet, und die Emissionshilfsapertur der das Hilfslicht bereitstellenden separaten Hilfslichtquelle ist derart konzentrisch zu der Detektionsapertur des Detektors angeordnet, dass die Detektionshilfsapertur des Hilfsdetektors durch Verstellen des Scanners zum einen mit dem Fokusbereich des Beleuchtungslichts und zum anderen mit dem aus der Emissionshilfsapertur der Hilfslichtquelle austretenden Hilfslicht abtastbar ist.

Eine erfindungsgemäße scannende und entscannende Mikroskopbaugruppe zur Durchführung der dritten Ausführungsform des erfindungsgemäßen Verfahrens weist die das Beleuchtungslicht bereitstellende Lichtquelle, wobei das Beleuchtungslicht aus der Emissionsapertur der Lichtquelle austritt, die das Beleuchtungslicht in den Fokusbereich in der Fokusebene fokussierende Optik, den Detektor für das Licht aus dem Fokusbereich, der die konfokal zu dem Fokusbereich anzuordnende Detektionsapertur aufweist, den Scanner zwischen der Lichtquelle und dem Detektor einerseits und der Fokusebene andererseits und die das Hilfslicht bereitstellende Hilfslichtquelle auf, deren Hilfslicht über den Scanner auf den Detektor richtbar ist. Dabei ist die Emissionshilfsapertur der Hilfslichtquelle, durch die das Hilfslicht austritt, derart in der Fokusebene angeordnet, und die Detektionshilfsapertur des separaten Hilfsdetektors ist derart konzentrisch zu der Emissionsapertur der Lichtquelle angeordnet, dass zum einen die Detektionshilfsapertur des separaten Hilfsdetektors und zum anderen die Detektionsapertur des Detektors durch Verstellen des Scanners mit dem Hilfslicht von der Hilfslichtquelle abtastbar ist.

Eine erfindungsgemäße scannende und entscannende Mikroskopbaugruppe zur Durchführung der vierten Ausführungsform des erfindungsgemäßen Verfahrens weist die das Beleuchtungslicht bereitstellende Lichtquelle, wobei das Beleuchtungslicht aus der Emissionsapertur der Lichtquelle austritt, die das Beleuchtungslicht in den Fokusbereich in der Fokusebene fokussierende Optik, den Detektor für das Licht aus dem Fokusbereich, der die konfokal zu dem Fokusbereich anzuordnende Detektionsapertur aufweist, den Scanner zwischen der Lichtquelle und dem Detektor einerseits und der Fokusebene andererseits, den Hilfsdetektor, auf den das Beleuchtungslicht über den Scanner richtbar ist, und die das Hilfslicht bereitstellende Hilfslichtquelle auf, deren Hilfslicht über den Scanner auf den Detektor richtbar ist. Dabei sind die Detektionshilfsapertur des Hilfsdetektors und die Emissionshilfsapertur der Hilfslichtquelle derart konzentrisch in der Fokusebene angeordnet, ist die Emissionshilfsapertur der das Hilfslicht bereitstellenden separaten Hilfslichtquelle derart konzentrisch zu der Detektionsapertur des Detektors angeordnet und ist die Detektionshilfsapertur des separaten Hilfsdetektors derart konzentrisch zu der Emissionsapertur der Lichtquelle angeordnet, dass die Detektionshilfsapertur des Hilfsdetektors durch Verstellen des Scanners mit dem aus der Emissionshilfsapertur der Hilfslichtquelle austretenden Hilfslicht abtastbar ist und dass die Detektionshilfsapertur des separaten Hilfsdetektors durch Verstellen des Scanners mit dem Hilfslicht von der Hilfslichtquelle abtastbar ist. Bevorzugte Ausführungsformen der erfindungsgemäßen Mikroskopbaugruppe wurden bereits im Zusammenhang mit dem erfindungsgemäßen Verfahren erläutert.

Bei einem erfindungsgemäßen Laserscanningmikroskop mit einem Objektiv und einer erfindungsgemäßen scannenden und entscannenden Mikroskopbaugruppe können die Detektionshilfsapertur des Hilfsdetektors und/oder die Emissionshilfsapertur der Hilfslichtquelle in einer Zwischenbildebene des Laserscanningmikroskops oder in einem Abzweig von einem Hauptstrahlengang des Laserscanningmikroskops angeordnet sein. Dieser Abzweig kann optional an einem Strahlteiler im Hauptstrahlengang des Laserscanningmikroskops, an einem Umlenkspiegel oder einem Drehspiegel des Scanners abzweigen. Alternativ oder zusätzlich kann in dem Abzweig zumindest ein Teil der das Beleuchtungslicht in den Fokusbereich in der Fokusebene fokussierenden Optik angeordnet sein.

Die Detektionsapertur des Detektors kann bei jeder Ausführungsform der erfindungsgemäßen scannenden und entscannenden Mikroskopbaugruppe und des erfindungsgemäßen Laserscanningmikroskops durch eine vor dem Detektor, d. h. seinem lichtempfindlichen Bereich, angeordnete Lochblende begrenzt sein.

Der Detektor kann bei jeder Ausführungsform der erfindungsgemäßen scannenden und entscannenden Mikroskopbaugruppe und des erfindungsgemäßen Laserscanningmikroskops ein Punktdetektor oder ein Arraydetektor sein. Dabei kann der Arraydetektor ein kleines Feld von 2x2 bis 10x10 lichtempfindlichen Elementen aufweisen oder er kann beispielsweise 13, auf einem hexagonalen Gitter angeordnete, lichtempfindliche Elemente aufweisen, um die Airyscheibe des auf den Detektor abgebildeten Lichts aus dem Fokusbereich der Fokusebene ortsaufgelöst zu registrieren. Die zweite Intensitätsverteilung des von dem Detektor registrierten Hilfslichts kann bei einem Arraydetekor die Summe der von allen oder einigen seiner einzelnen Elemente über die Stellungen des Scanners hinweg registrierten Einzelintensitätsverteilungen oder auch nur eine ausgewählte einzelne dieser Einzelintensitätsverteilungen sein. Es ist auch möglich die relativen Lagen der einzelnen Elemente des Arraydetektors zu der Emissionshilfsapertur der Hilfslichtquelle in der Fokusebene aus den Unterschiedenen zwischen den Einzelintensitätsverteilungen zu ermitteln.

Grundsätzlich kann auch jeder Hilfsdetektor nicht nur ein Punktdetektor, sondern auch ein Arraydetektor sein.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Umlenkspiegel die Rede ist, ist dies so zu verstehen, dass genau ein Umlenkspiegel, zwei Umlenkspiegel oder mehr Umlenkspiegel vorhanden sind. Die in den Patentansprüchen angeführten Merkmale können durch andere Merkmale ergänzt werden oder die einzigen Merkmale sein, die das jeweilige Verfahren oder das jeweilige Erzeugnis aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt ein erfindungsgemäßes Laserscanningmikroskop mit einer ersten Ausführungsform der erfindungsgemäßen Mikroskopbaugruppe bei der Durchführung eines Schritts mehrerer Ausführungsformen des erfindungsgemäßen Verfahrens.
- **Fig. 2**: zeigt das erfindungsgemäße Laserscanningmikroskop gemäß Fig. 1 bei der Durchführung eines weiteren Schritts mehrerer Ausführungsformen des erfindungsgemäßen Verfahrens.
- **Fig. 3**: zeigt eine weitere Ausführungsform des erfindungsgemäßen Laserscanningmikroskops mit einer zweiten Ausführungsform der erfindungsgemäßen Mikroskopbaugruppe.
- **Fig. 4**: zeigt eine scannende und entscannende Mikroskopbaugruppe mit einer angeschlossenen erfindungsgemäßen Vorrichtung.
- **Fig. 5**: zeigt eine weitere Ausführungsform des erfindungsgemäßen Laserscanningmikroskops mit einer dritten Ausführungsform der erfindungsgemäßen Mikroskopbaugruppe.
- **Fig. 6**: zeigt ein Detail einer vierten Ausführungsform der erfindungsgemäßen Mikroskopbaugruppe.
- **Fig. 7**: ist ein Schaltplan für die Ansteuerung einer Leuchtdiode, die bei verschiedenen Ausführungsformen der erfindungsgemäßen Mikroskopbaugruppe und der erfindungsgemäßen Vorrichtung sowohl als Hilfsdetektor als auch als Hilfslichtquelle verwendbar ist, und
- **Fig. 8 bis 10**: illustrieren eine erste, eine zweite und eine dritte Ausführungsform des erfindungsgemäßen Verfahrens an daran angepassten, aber nur schematisch dargestellten erfindungsgemäßen Mikroskopbaugruppen.

### FIGURENBESCHREIBUNG

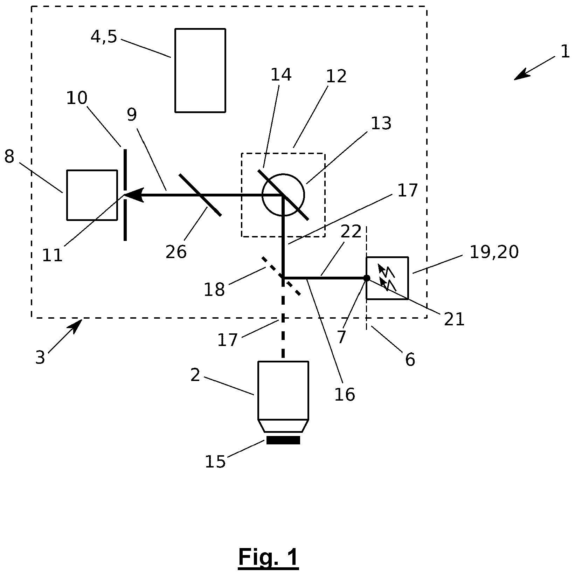

Das in **Fig. 1** schematisch dargestellte Laserscanningmikroskop 1 umfasst ein Objektiv 2 und eine Mikroskopbaugruppe 3, deren Bestandteile mit einer gestrichelten Linie umrandet sind. Zu der Mikroskopbaugruppe 3 gehört eine Lichtquelle 4, insbesondere in Form eines Lasers 5, zur Bereitstellung von Beleuchtungslicht. In dem in Fig. 1 illustrierten Schritt des erfindungsgemäßen Verfahrens ist die Lichtquelle 4 jedoch nicht aktiviert, um das Beleuchtungslicht bereitzustellen.

Weiterhin gehört zu der Mikroskopbaugruppe 3 eine das Beleuchtungslicht in einen Fokusbereich 7 in einer Fokusebene 6 fokussierenden Optik. In Fig. 1 ist die Fokusebene 6 mit einer gestrichelten Linie und der Fokusbereich 7 in der Fokusebene 6 mit einem Punkt eingezeichnet. Die Bestandteile der fokussierenden Optik sind nicht wiedergegeben. Weiterhin gehört zu der Mikroskopbaugruppe 3 ein Detektor 8 für Licht 9 aus dem Fokusbereich 7. Vor dem eigentlichen Detektor 8, d. h. dessen lichtempfindlichen Bereich, befindet sich eine Lochblende 10. Die Öffnung der Lochblende 10 definiert eine Detektionsapertur 11 des Detektors 8, die bei korrekter Justierung der Mikroskopbaugruppe 3 konfokal zu dem Fokusbereich 7 angeordnet ist. Zwischen der Lichtquelle 4 und dem Detektor 8 mit der Lochblende 10 einerseits und der Fokusebene 6 andererseits ist ein in Fig. 1 nur schematisch dargestellter Scanner 12 der Mikroskopbaugruppe 3 angeordnet. Der Scanner umfasst mindestens einen Drehspiegel 13, 14 je lateraler Richtung, in der der Scanner zum Abtasten einer vor dem Objektiv 2 angeordneten Probe 15 mit dem Beleuchtungslicht von der Lichtquelle 4 vorgesehen ist. Der Scanner 12 dient jedoch nicht nur zum Scannen der Probe 15, sondern auch zum Entscannen des Lichts 9, das von dem Beleuchtungslicht in der Probe 15 hervorgerufen wird, damit dieses Licht selektiv von dem Detektor 8 erfasst wird. Dabei kommt es auf eine genaue Konfokalität der Mikroskopbaugruppe 3, d. h. ein genaues Zusammenfallen des Fokusbereichs 7 des in die Probe 15 fokussierten Beleuchtungslichts und einer Abbildung der Öffnung der Detektionsapertur 11 des Detektors 8 in die Probe 15 an. Diese Konfokalität wird bei dem erfindungsgemäßen Verfahren in der in Fig. 1 eingezeichneten Fokusebene 6 überprüft. Diese Fokusebene 6 liegt hier in einem Abzweig 16 von dem Hauptstrahlengang 17 des Laserscanningmikroskops. Der Abzweig 16 zweigt von dem Hauptstrahlengang 17 an einem Strahlteiler 18 ab. In dem Abzweig 16 ist ein photoelektrisches Bauteil 19 angeordnet, das in dem Schritt des erfindungsgemäßen Verfahrens, der in Fig. 1 illustriert ist, als Hilfslichtquelle 20 verwendet wird. Die Hilfslichtquelle 20 weist in der Fokusebene 6 eine Emissionshilfsapertur 21 auf. In dem Schritt gemäß Fig. 1 wird durch Verstellen des Scanners 12 die Detektionsapertur 11 des Detektors 8 mit Hilfslicht 22 von der Hilfslichtquelle 20, das durch die Emissionshilfsapertur 21 in der Fokusebene 6 austritt, abgetastet. Dabei wird eine Intensitätsverteilung des von dem Detektor 8 registrierten Hilfslichts 22 über die verschiedenen Stellungen des Scanners 12 hinweg erfasst, d. h. diesen verschiedenen Stellungen des Scanners 12 zugeordnet. Anders gesagt wird mithilfe der Hilfslichtquelle 20 ein Scanbild der Detektionsapertur 11 des Detektors 8 aufgenommen.

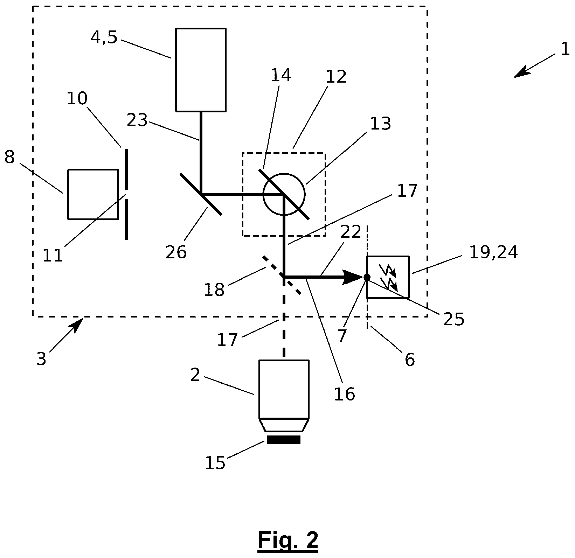

In dem Schritt des erfindungsgemäßen Verfahrens, der in **Fig. 2** dargestellt ist, wird die Lichtquelle 4 zur Bereitstellung des Beleuchtungslichts 23 aktiviert, und das photoelektrische Bauteil 19 wird als Hilfsdetektor 24 verwendet. Dann wird eine in der Fokusebene 6 liegende Detektionshilfsapertur 25 des Hilfsdetektors 24, die konzentrisch zu der Emissionshilfsapertur 21 gemäß Fig. 1 angeordnet ist, mit dem Beleuchtungslicht 23 abgetastet, wobei eine weitere Intensitätsverteilung des von dem Hilfsdetektor 24 registrierten Beleuchtungslichts 23 über die verschiedenen Stellungen des Scanners 12 hinweg erfasst wird. In diesem Schritt wird also ein Scanbild der Detektionshilfsapertur 25 des Hilfsdetektors 24 in der Fokusebene 6 aufgenommen. Dabei sind das Scanbild der Detektionsapertur 11 des Detektors 8, das gemäß Fig. 1 aufgenommen wird, und das Scanbild der Detektionshilfsapertur 25, das gemäß Fig. 2 aufgenommen wird, bezüglich der zugehörigen Stellungen des Scanners 12 dann konzentrisch, wenn die Öffnung der Lochblende 10 genau konfokal zu dem Fokusbereich 7 in der Fokusebene 6 angeordnet ist, in den das Beleuchtungslicht 23 fokussiert wird. Eine Konzentrizität der beiden Scanbilder bedeutet insbesondere, dass die Maxima der beiden Intensitätsverteilungen und/oder deren Schwerpunkte zusammenfallen. Jeder feststellbare Lageunterschied zwischen den Maxima oder den Schwerpunkten weist auf einen Fehler der Konfokalität der Mikroskopbaugruppe 3 hin, der durch eine reale oder virtuelle Relativverlagerung der Lichtquelle 4 gegenüber dem Detektor 8 bzw. seiner Detektionsapertur 11 auszugleichen ist, um die Mikroskopbaugruppe 3 korrekt zu justieren. Dabei kann eine virtuelle Relativverlagerung zum Beispiel durch Verkippen eines Strahlteilers 26 auf der dem Objektiv 2 abgekehrten Seite des Scanners 12 bewirkt werden, der die Strahlengänge des Beleuchtungslichts 23 von der Lichtquelle 4 und des Lichts 9 zu dem Detektor 8 zusammenführt bzw. trennt.

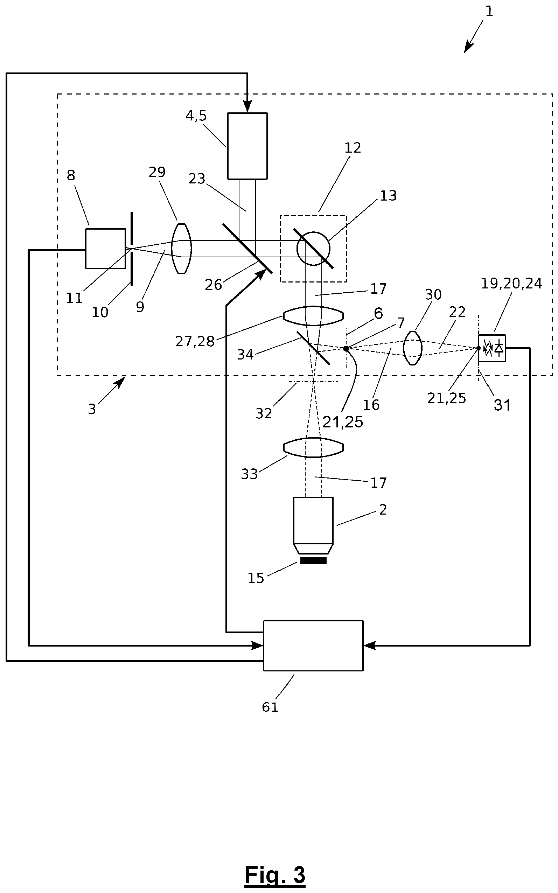

Bei der Wiedergabe des erfindungsgemäßen Laserscanningmikroskops 1 in Fig. 3 ist die Optik 27, die das Beleuchtungslicht in den Fokusbereich 7 in der Fokusebene 6 fokussiert, dargestellt. Diese Optik 27 umfasst eine sogenannte Scanlinse 28. Eine weitere Optik 29 fokussiert das von dem Detektor 8 zu detektierende entscannte Licht 9 auf die Öffnung der Lochblende 10, d. h. in die Detektionsapertur 11 des Detektors 8. Mit noch einer weiteren Optik 30 wird das photoelektrische Bauteil 19 in die Fokusebene 6 abgebildet, um die Detektionshilfsapertur 25 und die Emissionshilfsapertur 21 virtuell in der Fokusebene 6 anzuordnen. Alternativ kann man die Optik 30 als Teil der Optik 27 sowie entsprechend die in Fig. 3 eingezeichnete Fokusebene 6 als Zwischenfokusebene und die dort eingezeichnete weitere Fokusebene 31, in der das photoelektrische Bauteil 19 angeordnet ist, als die Fokusebene ansehen, in der die Emissionshilfsapertur 21 der Hilfslichtquelle 20 dann real konzentrisch zu der Detektionshilfsapertur 25 des Hilfsdetektors 24 angeordnet ist. Ganz allgemein kann die Optik 27 zwischen der Lichtquelle 4 und dem Detektor 8 mit der Lochblende 10 einerseits und der Fokusebene 6, in der das photoelektrische Bauteil 19 angeordnet ist, andererseits ein oder mehrere Zwischenfokusebenen aufweisen. Die in Fig. 3 eingezeichnete Fokusebene 6 in dem Abzweig 16 entspricht einer Zwischenbildebene 32 in dem Hauptstrahlengang 17 des Scanningmikroskops 1. In diesem Hauptstrahlengang 17 ist zwischen der Zwischenbildebene 32 und dem Objektiv 2 eine Tubuslinse 33 angeordnet. Letztlich zeigt Fig. 3 statt des Strahlteilers 18 gemäß den Fig. 1 und 2 einen Umlenkspiegel 34, der temporär zur Durchführung des erfindungsgemäßen Verfahrens in den Hauptstrahlengang 17 eingebracht wird, um den Abzweig 16 zu der Fokusebene 6 hin zu aktivieren.

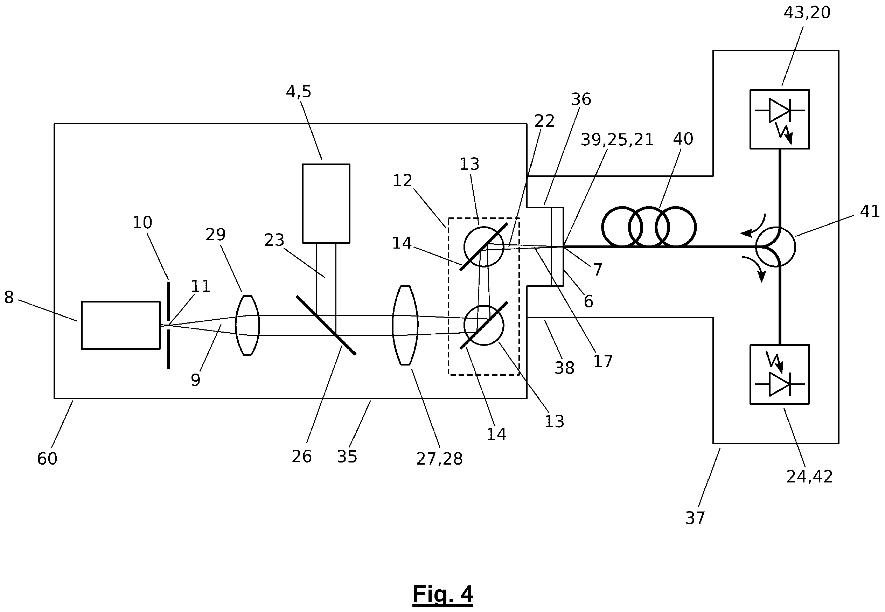

In Fig. 3 ist eine Überprüfungseinrichtung 61 skizziert, die die anhand der Fig. 1 und 2 erläuterten Schritte des erfindungsgemäßen Verfahrens in grundsätzlich derselben Weise bei der Ausführungsform des erfindungsgemäßen Laserscanningmikroskops 1 gemäß Fig. 3 automatisch durchführt und dazu das photoelektrische Bauteil 19, die Lichtquelle 4 und einen nicht separat dargestellten Stelltrieb für den Strahlteiler 26 ansteuert sowie die von dem Detektor 8 und dem als Hilfsdetektor 24 betriebenen photoelektrischen Bauteil 19 registrierten Intensitäten des Hilfslichts 22 bzw. des Beleuchtungslichts 23 einliest. Die Überprüfungseinrichtung 61 kann bei allen erfindungsgemäßen Mikroskopbaugruppen 3 und auch dann vorgesehen sein, wenn eine Mikroskopbaugruppe nach dem Stand der Technik vorübergehend mit einer erfindungsgemäßen Vorrichtung kombiniert wird, um das erfindungsgemäße Verfahren durchzuführen, wie dies anhand der folgenden Fig. 4 erläutert werden wird.

**Fig. 4** zeigt kein komplettes Laserscanningmikroskop, sondern nur eine scannende und entscannende Baugruppe 60 für ein solches Laserscanningmikroskop. Diese Mikroskopbaugruppe 60 gemäß Fig. 4 entspricht als solche dem Stand der Technik. Abweichend von den Fig. 1 bis 3 weist der Scanner 12 insgesamt vier Drehspiegel 13 und 14 auf, von denen jeder der beiden Ablenkrichtungen des Scanners 12 jeweils zwei Drehspiegel 13 bzw. zwei Drehspiegel 14 zugeordnet sind. Die Scanlinse 28 der Optik 27 befindet sich dabei auf der der Lichtquelle 4 und dem Detektor 8 zugewandten Seite des Scanners 12. Auf der Lichtquelle 4 und dem Detektor 8 abgewandten Seite des Scanners 12 ist an einem Gehäuse 35 oder einer anderen tragenden Struktur der Mikroskopbaugruppe 60 ein Anschluss 36 ausgebildet, um die Mikroskopbaugruppe 60 gegenüber einem entsprechenden Anschluss, insbesondere einem Kameraanschluss eines Lichtmikroskops mit dem Objektiv 2 gemäß den Fig. 1 bis 3 auszurichten und daran zu lagern. Gemäß Fig. 4 ist an dem Anschluss 36 jedoch eine erfindungsgemäße Vorrichtung 37 mit einem zu dem Anschluss 36 derart passenden Gegenanschluss 38 gelagert, dass ein Endquerschnitt 39 eines Lichtleiters 40 in der Fokusebene 6 angeordnet ist, in die die Optik 27 das Beleuchtungslicht 23 fokussiert. Der Lichtleiter 40 führt über einen faseroptischen Zirkulator 41 zu einer als Hilfsdetektor 24 dienenden Photodiode 42. Über denselben Zirkulator 41 ist eine Laserdiode 43 als Hilfslichtquelle 20 an den Lichtleiter 40 angeschlossen. Der Zirkulator 41 leitet das in den Endquerschnitt 39 des Lichtleiters 40 eintretende Beleuchtungslicht 23 exklusiv an den Hilfsdetektor 24 weiter, während er das Hilfslicht 22 von der Hilfslichtquelle 20 exklusiv zu dem Endquerschnitt 39 des Lichtleiters 40 führt. Der Endquerschnitt 39 des Lichtleiters 40 bildet die Detektionshilfsapertur 25 und die Emissionshilfsapertur 21 in der Fokusebene 6. Diese Fokusebene 6 befindet sich gemäß Fig. 4 im Hauptstrahlengang 17. Unter Verwendung der Vorrichtung 37 ist das erfindungsgemäße Verfahren durchführbar, um die Mikroskopbaugruppe 60 hinsichtlich der konfokalen Anordnung der Öffnung der Lochblende 10 zu dem Fokusbereich 7, in den das Beleuchtungslicht 23 in der Fokusebene 6 fokussiert wird, zu überprüfen sowie etwaige Fehler der Konfokalität festzustellen und dann durch Relativverlagerung der Lochblende 10 gegenüber der Lichtquelle 4 zu korrigieren.

Wenn der Hilfsdetektor 24 wie gemäß Fig. 4 ein von der Hilfslichtquelle 20 getrenntes Bauteil ist, können die beiden anhand der Fig. 1 und 2 erläuterten Schritte des erfindungsgemäßen Verfahrens auch gleichzeitig durchgeführt werden, wobei mit dem Detektor 8 und dem Hilfsdetektor 24 die beiden Intensitätsverteilungen, deren Unterschiede auf einen Fehler der Konfokalität der Mikroskopbaugruppe 60 hinweisen, gleichzeitig aufgenommen werden. Dann sind die beiden Intensitätsverteilungen automatisch denselben Stellungen des Scanners 12 zugeordnet.

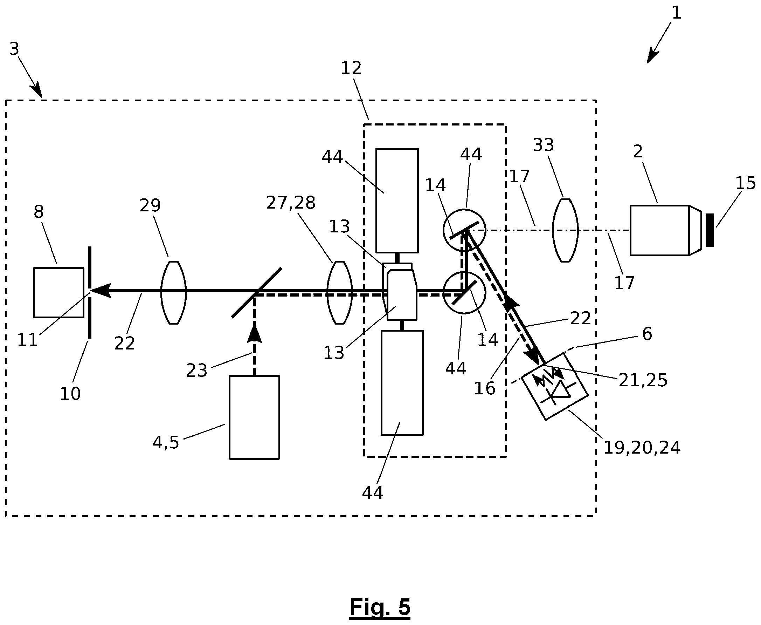

Bei der Ausführungsform des erfindungsgemäßen Laserscanningmikroskops 1 gemäß **Fig. 5** entspricht die Mikroskopbaugruppe 3 grundsätzlich derjenigen gemäß Fig. 4. Es handelt sich jedoch um eine erfindungsgemäße Mikroskopbaugruppe mit einem integrierten photoelektrischen Bauteil 19, das als Hilfslichtquelle 20 und Hilfsdetektor 24 verwendet wird. Dabei ist aber anders als in den Fig. 1 bis 3 kein zusätzlicher Strahlteiler 18 oder Umlenkspiegel 34 im Hauptstrahlengang 17 angeordnet, um das Beleuchtungslicht 23 zu dem in dem Abzweig 16 angeordneten Hilfsdetektor 24 umzulenken bzw. das Hilfslicht 22 von der Hilfslichtquelle 20 zu dem Detektor 8 zu lenken, sondern hierfür wird ein Drehspiegel 14 der vier Drehspiegel 13, 14 verwendet, die hier samt ihrer Drehantriebe 44 dargestellt sind. Die anderen Drehspiegel 13, 14 können dann zum Abscannen der Detektionshilfsapertur 25 des Hilfsdetektors 24 bzw. der Detektionsapertur 11 des Detektors 8 verwendet werden. Das photoelektrische Bauteil 19 befindet sich gegenüber den weiteren Bestandteilen der Mikroskopbaugruppe 3 an einer ortsfesten Position, in der die Detektionshilfsapertur 25 und die Emissionshilfsapertur 21 in der Fokusebene 6 liegen und in der das photoelektrische Bauteil 19 mit dem Beleuchtungslicht 23 über den Scanner 12 erreichbar ist.

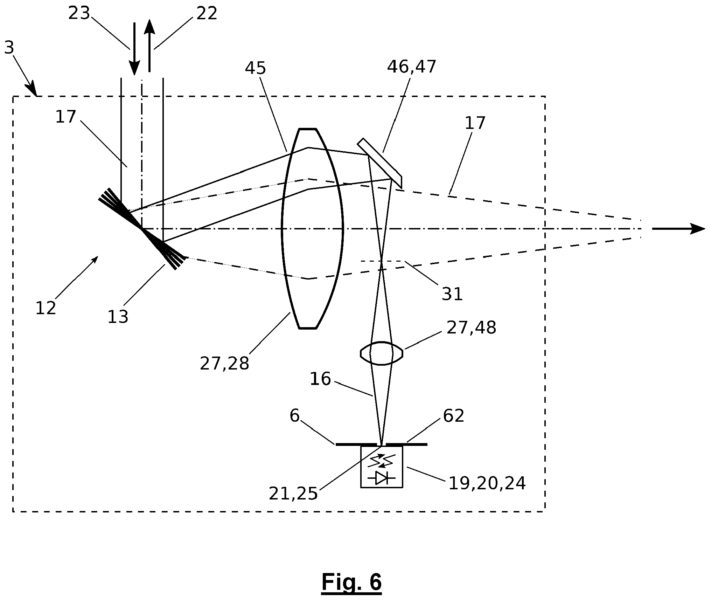

Bei dem in **Fig. 6** dargestellten Detail einer weiteren erfindungsgemäßen Mikroskopbaugruppe zweigt der Abzweig 16 in einem Randbereich 45 einer Scanlinse 28 der fokussierenden Optik 27 ab. Das durch diesen Randbereich 45 hindurchtretende Beleuchtungslicht 23 wird von einem Umlenkspiegel 46 in Form eines Kantenspiegels 47 zu dem photoelektrischen Bauteil 19 hin umgelenkt, wobei es durch eine weitere Linse 48 der fokussierenden Optik 27 hindurchtritt und so in die Fokusebene 6 fokussiert wird. Auf diese Weise wird eine sehr kompakte Anordnung des photoelektrischen Bauteils 19, das sowohl die Hilfslichtquelle 20 als auch den Hilfsdetektor 24 ausbildet, in der Mikroskopbaugruppe 3 erreicht. Fig. 6 erläutert weiterhin, dass die Emissionshilfsapertur 21 und die Detektionshilfsapertur 25 nicht nur durch die Hilfslichtquelle 20 und den Hilfsdetektor 24, d. h. hier das photoelektrische Bauteil 19, selbst vorgegeben werden können, sondern auch mit einer insbesondere in der Fokusebene 6 angeordneten zusätzlichen Lochblende 62. Wenn die Öffnung der Lochblende 62 kleiner als die lichtemittierende Fläche der Hilfslichtquelle 20 bzw. die lichtempfindliche Fläche des Hilfsdetektors 24 ist, definiert sie die Emissionshilfsapertur 21 und die Detektionshilfsapertur 25.

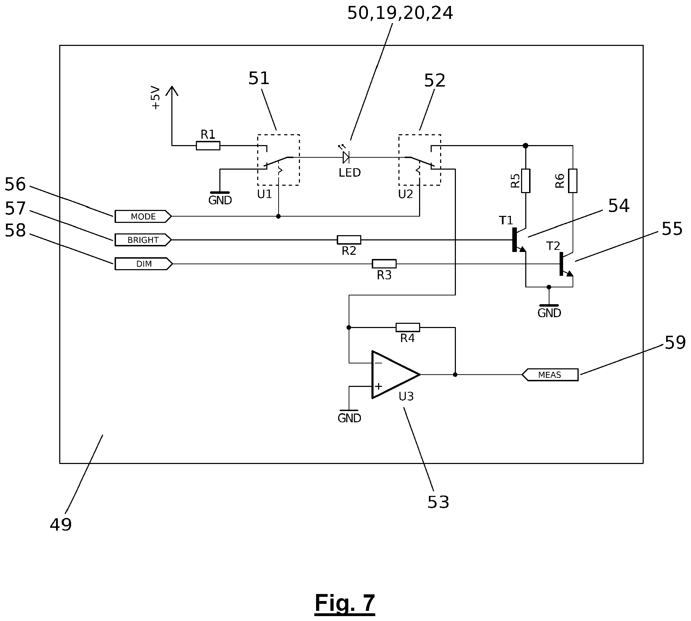

**Fig.** 7 zeigt eine mögliche Treiberschaltung 49 für eine Leuchtdiode 50 zur Verwendung als das photoelektrische Bauteil 19, d. h. sowohl als Hilfslichtquelle 20 als auch als Hilfsdetektor 24. In der dargestellten Schaltstellung von zwei Umschaltern 51 und 52 ist die Leuchtdiode 50 zur Verwendung als Hilfsdetektor 24 an einen Operationsverstärker 53 angeschlossen. Bei Umschaltung beider Umschalter 51 und 52 wird die Leuchtdiode 50 als Hilfslichtquelle betrieben, wobei die Intensität des Hilfslichts über zwei Transistoren 54 und 55 einstellbar ist. Die Betriebsart der Leuchtdiode 50 wird über einen Signaleingang 56 ausgewählt. Die Intensität des Hilfslichts von der LED 50 wird über Steuereingänge 57 und 58 angewählt, und die von der Leuchtdiode 50 als Hilfsdetektor 24 registrierte Intensität des Beleuchtungslichts wird an einem Signalausgang 59 ausgegeben.

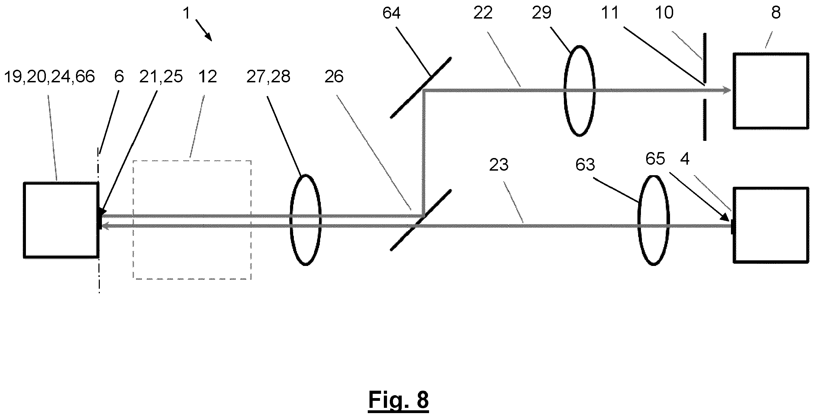

**Fig. 8** illustriert eine erste Ausführungsform des erfindungsgemäßen Verfahrens zur Überprüfung der Konfokalität der hier nur schematisch dargestellten scannenden und entscannenden Mikroskopbaugruppe 1. Dabei weist die Mikroskopbaugruppe 1 hier zusätzlich einen Umlenkspiegel 64 zur Umlenkung des Detektionsstrahlengangs zu dem Detektor 8 und eine weitere Optik 63 im Beleuchtungsstrahlengang zwischen der Lichtquelle 4 und dem Strahlteiler 26 auf. Darüber hinaus ist eine Emissionsapertur 65 der Lichtquelle 4, aus der das Beleuchtungslicht 23 austritt , dargestellt, und das elektrooptische Bauteil 19 ist zusätzlich mit einem weiteren Bezugszeichen für eine zur Durchführung des erfindungsgemäßen Verfahrens in der Fokusebene 6 anzuordnende Hilfseinrichtung 66 versehen.

Die erste Ausführungsform des erfindungsgemäßen Verfahrens umfasst die Schritte, wie sie anhand der Fig. 1 und 2 erläutert wurden. Das heißt, durch Verstellen des Scanners 12 wird mit Hilfe des von der Lichtquelle 4 kommenden Beleuchtungslichts 23 die Detektionshilfsapertur 25 des Hilfsdetektors 24 in der Fokusebene 6 abgescannt, und ebenfalls durch Verstellen des Scanners 12 wird mit dem aus der Emissionshilfsapertur 21 der Hilfslichtquelle 20 austretenden Hilfslicht 22 die Detektionsapertur 11 des Detektors 8 abgescannt. Die beiden dabei über die Stellungen des Scanners 12 aufgenommenen Intensitätsverteilungen des von dem Hilfsdetektor 24 registrierten Beleuchtungslichts 23 für den Beleuchtungsstrahlengang und des von dem Detektor 8 registrierten Hilfslichts 22 für den Detektionsstrahlengang sind genau dann gleich, das heißt haben gleiche Maxima und/oder Schwerpunkte, wenn die Konfokalität der Mikroskopbaugruppe 1 gegeben ist.

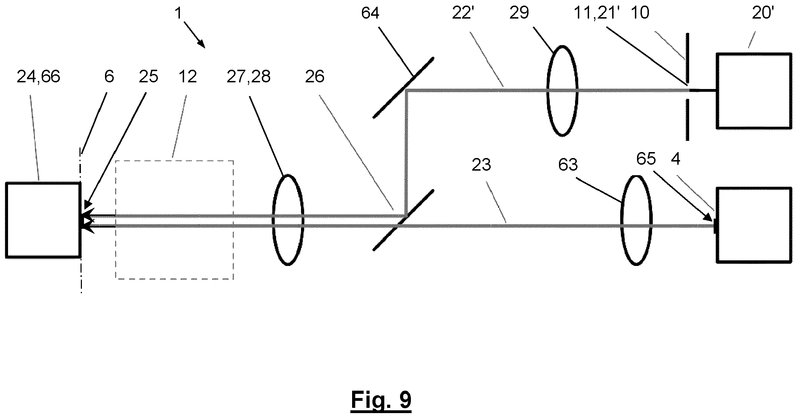

Bei einer zweiten Ausführungsform des erfindungsgemäßen Verfahrens gemäß **Fig. 9** wird zwar der Schritt gemäß Fig. 2 durchgeführt, das heißt, die Detektionshilfsapertur 25 des Hilfsdetektors 24 in der Fokusebene 6 wird mit dem Beleuchtungslicht 23 von der Lichtquelle 4 durch Verstellen des Scanners 12 abgetastet, um die Orientierung des Beleuchtungsstrahlengangs zu erfassen. Die Orientierung des Detektionsstrahlengangs wird aber nicht durch Abtasten der Detektionsapertur 11 des Detektors 8 mit Hilfslicht 22 erfasst, das aus einer konzentrisch zu der Detektionshilfsapertur 25 angeordneten Emissionshilfsapertur 21 in der Fokusebene 6 austritt. Vielmehr wird die Richtung der Durchstrahlung des Detektionsstrahlengangs umgekehrt und der Detektor 8 durch eine von der Hilfseinrichtung 66 separate Hilfslichtquelle 20' ersetzt, deren Emissionshilfsapertur 21' ebenso wie sonst die Detektionsapertur 11 des Detektors 8 durch die Öffnung der Lochblende 10 definiert ist. Mit dem durch diese Emissionshilfsapertur 21' austretenden Hilfslicht 22' wird die Detektionshilfsapertur 25 des Hilfsdetektors 24 in der Fokusebene 6 durch Verstellen des Scanners 12 abgetastet. Die dabei über die Stellung des Scanners erfasste Intensitätsverteilung des von dem Hilfsdetektor 24 registrierten Hilfslichts 22' ist dann die die Orientierung des Detektionsstrahlengangs beschreibende zweite Intensitätsverteilung, die beim Überprüfen der Konfokalität der Mikroskopbaugruppe 1 mit der die Orientierung des Beleuchtungsstrahlengangs beschreibenden ersten Intensitätsverteilung verglichen wird.

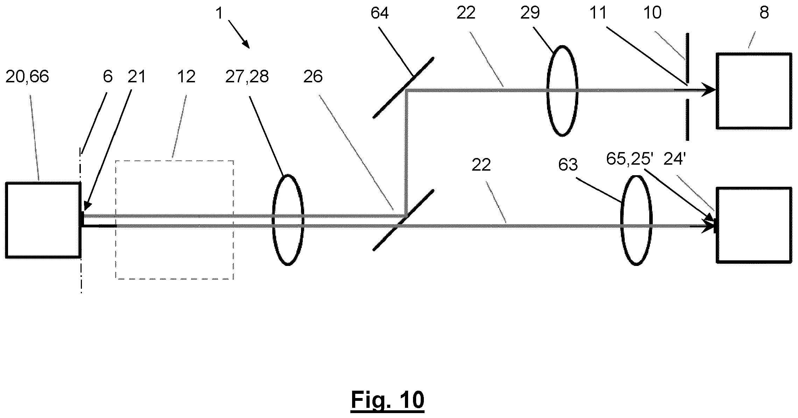

Während bei der zweiten Ausführungsform des erfindungsgemäßen Verfahrens gemäß Fig. 9 die Hilfseinrichtung 66 in der Fokusebene 6 nur der Hilfsdetektor 24 ist und eine separate Hilfslichtquelle 20' am Ort des Detektors 8 zum Einsatz kommt, ist bei der dritten Ausführungsform des erfindungsgemäßen Verfahrens gemäß **Fig. 10** die Hilfseinrichtung 66 in der Fokusebene 6 nur die Hilfslichtquelle 20. Mit dem von der Hilfslichtquelle 20 durch ihre Emissionshilfsapertur 21 abgestrahlten Hilfslicht 22 wird in dem Schritt gemäß Fig. 1 durch Verstellen des Scanners 12 die Detektionsapertur 11 des Detektors 8 abgetastet. Weiter erfolgt abweichend von dem Vorgehen gemäß Fig. 2 mit demselben Hilfslicht 22 über dieselben Stellungen des Scanners 12 ein Abtasten einer Detektionshilfsapertur 25' eines von der Hilfseinrichtung 66 separaten Hilfsdetektors 24' am Ort der Lichtquelle 4. Dabei kann derselbe Ort der Lichtquelle 4 und des separaten Hilfsdetektors 24' zum Beispiel dadurch realisiert werden, dass die Emissionsapertur 65 der Lichtquelle 4 und die Detektionshilfsapertur 25' des Hilfsdetektors 24' durch dieselbe Fläche einer Lichtleiterfaser ausgebildet wird, die über einen Zirkulator zu der Lichtquelle 4 einerseits und dem Hilfsdetektor 24' andererseits verzweigt. Bei der dritten Ausführungsform gemäß Fig. 10 wird also die Richtung der Durchstrahlung des Beleuchtungsstrahlengangs von der Lichtquelle 4 zu der Fokusebene 6 für das Überprüfen der Konfokalität der Mikroskopbaugruppe 1 umgekehrt. Die dabei erfasste erste Intensitätsverteilung des mit dem separaten Hilfsdetektor 24' registrierten Hilfslicht 22 entspricht aber der sonst gemäß Fig. 2 für den Beleuchtungsstrahlengang registrierten ersten Intensitätsverteilung und kann genauso mit der für den Detektionsstrahlengang erfassten zweiten Intensitätsverteilung verglichen werden, um die Konfokalität der Mikroskopbaugruppe 1 zu überprüfen.

### BEZUGSZEICHENLISTE

- 1: Laserscanningmikroskop
- 2: Objektiv
- 3: Mikroskopbaugruppe
- 4: Lichtquelle
- 5: Laser
- 6: Fokusebene
- 7: Fokusbereich
- 8: Detektor
- 9: Licht
- 10: Lochblende
- 11: Detektionsapertur des Detektors 8
- 12: Scanner
- 13: Drehspiegel
- 14: Drehspiegel
- 15: Probe
- 16: Abzweig
- 17: Hauptstrahlengang
- 18: Strahlteiler
- 19: photoelektrisches Bauteil
- 20: Hilfslichtquelle
- 20': separate Hilfslichtquelle
- 21: Emissionshilfsapertur der Hilfslichtquelle 20
- 21': Emissionshilfsapertur der separaten Hilfslichtquelle 20'
- 22: Hilfslicht von der Hilfslichtquelle 20
- 22': Hilfslicht von der separaten Hilfslichtquelle 20'
- 23: Beleuchtungslicht
- 24: Hilfsdetektor
- 24': separater Hilfsdetektor
- 25: Detektionshilfsapertur des Hilfsdetektors 24
- 25': Detektionshilfsapertur des separaten Hilfsdetektors 24
- 26: Strahlteiler
- 27: fokussierende Optik
- 28: Scanlinse
- 29: weitere Optik
- 30: weitere Optik
- 31: Fokusebene
- 32: Zwischenbildebene
- 33: Tubuslinse
- 34: Umlenkspiegel
- 35: Gehäuse
- 36: Anschluss
- 37: Vorrichtung
- 38: Gegenanschluss
- 39: Endquerschnitt
- 40: Lichtleiter
- 41: Zirkulator
- 42: Photodiode
- 43: Laserdiode
- 44: Drehantrieb
- 45: Randbereich
- 46: Umlenkspiegel
- 47: Kantenspiegel
- 48: Linse
- 49: Treiberschaltung
- 50: LED
- 51: Umschalter
- 52: Umschalter
- 53: Operationsverstärker
- 54: Transistor
- 55: Transistor
- 56: Signaleingang
- 57: Steuereingang
- 58: Steuereingang
- 59: Signalausgang
- 60: Mikroskopbaugruppe
- 61: Überprüfungseinrichtung
- 62: Lochblende
- 63: weitere Optik
- 64: Spiegel
- 65: Emissionsapertur der Lichtquelle 4
- 66: Hilfseinrichtung

## Patentansprüche

1. Verfahren zur Überprüfung der Konfokalität einer scannenden und entscannenden Mikroskopbaugruppe (3) mit
- einer Beleuchtungslicht (23) bereitstellenden Lichtquelle (4), wobei das Beleuchtungslicht (23) aus einer Emissionsapertur (65) der Lichtquelle (4) austritt,
- einer das Beleuchtungslicht (23) in einen Fokusbereich (7) in einer Fokusebene (6) fokussierenden Optik (27),
- einem Licht aus dem Fokusbereich (7) detektierenden Detektor (8), der eine konfokal zu dem Fokusbereich (7) anzuordnende Detektionsapertur (11) aufweist,
- einem Scanner (12) zwischen der Lichtquelle (4) und dem Detektor (8) einerseits und der Fokusebene (6) andererseits und
- wobei ein Hilfsdetektor (24) mit einer Detektionshilfsapertur (25) und/oder eine Hilfslicht (22) bereitstellende Hilfslichtquelle (20) mit einer Emissionshilfsapertur (21), aus der das Hilfslicht (22) austritt, in der Fokusebene (6) angeordnet ist/sind, wobei dann, wenn der Hilfsdetektor (24) und die Hilfslichtquelle (20) in der Fokusebene (6) angeordnet sind, die Detektionshilfsapertur (25) und die Emissionshilfsapertur (21) konzentrisch in der Fokusebene (6) angeordnet sind,
- wobei die in der Fokusebene (6) angeordnete Detektionshilfsapertur (25) des Hilfsdetektors (24) durch Verstellen des Scanners (12) mit dem Fokusbereich (7) des Beleuchtungslichts (23) abgetastet wird, wobei eine erste Intensitätsverteilung des von dem Hilfsdetektor (24) registrierten Beleuchtungslichts (23) über verschiedene Stellungen des Scanners (12) hinweg erfasst wird, oder eine konzentrisch zu der Emissionsapertur (65) der Lichtquelle (4) angeordnete Detektionshilfsapertur (25') eines separaten Hilfsdetektors (24') durch Verstellen des Scanners (12) mit dem Hilfslicht (22), das durch die in der Fokusebene (6) angeordnete Emissionshilfsapertur (21) der Hilfslichtquelle (20) austritt, abgetastet wird, wobei eine erste Intensitätsverteilung des von dem separaten Hilfsdetektor (24') registrierten Beleuchtungslichts (23) über verschiedene Stellungen des Scanners (12) hinweg erfasst wird,
- wobei die Detektionsapertur (11) des Detektors (8) durch Verstellen des Scanners (12) mit dem Hilfslicht (22), das durch die in der Fokusebene (6) angeordnete Emissionshilfsapertur (21) der Hilfslichtquelle (20) austritt, abgetastet wird, wobei eine zweite Intensitätsverteilung des von dem Detektor (8) registrierten Hilfslichts (22) über die Stellungen des Scanners (12) hinweg erfasst wird, oder die in der Fokusebene (6) angeordnete Detektionshilfsapertur (25) des Hilfsdetektors (24) durch Verstellen des Scanners (12) mit Hilfslicht (22'), das durch eine konzentrisch zu der Detektionsapertur (11) angeordnete Emissionshilfsapertur (21') einer separaten Hilfslichtquelle (20') austritt, abgetastet wird, wobei eine zweite Intensitätsverteilung des von dem Hilfsdetektor (24) registrierten Hilfslichts (22) über die Stellungen des Scanners (12) hinweg erfasst wird, und
- wobei mindestens ein Unterschied zwischen der ersten Intensitätsverteilung und der zweiten Intensitätsverteilung über die verschiedenen Stellungen des Scanners (12) hinweg als Maß für einen Fehler der Konfokalität erfasst wird.

2. Verfahren nach Anspruch 1, **dadurch gekennzeichnet, dass** der mindestens eine Unterschied ein Lageunterschied zwischen Maxima oder Schwerpunkten der ersten Intensitätsverteilung und der zweiten Intensitätsverteilung ist.

3. Verfahren nach einem der vorhergehenden Ansprüche, **dadurch gekennzeichnet, dass** der mindestens eine Unterschied durch eine reale und oder virtuelle Relativverlagerung der Detektionsapertur (11) des Detektors (8) gegenüber der Lichtquelle (4) kompensiert wird.

4. Verfahren nach einem der vorhergehenden Ansprüche, **dadurch gekennzeichnet,**
- **dass** die Detektionshilfsapertur (25) und/oder die Emissionshilfsapertur (21), die in der Fokusebene angeordnet ist/sind, in einer Zwischenbildebene eines die scannende und entscannende Mikroskopbaugruppe (3) und ein Objektiv (2) umfassenden Laserscanningmikroskops angeordnet wird/werden oder
- **dass** die Detektionshilfsapertur (25) und/oder die Emissionshilfsapertur (21), die in der Fokusebene angeordnet ist/sind, in einem Abzweig von einem Hauptstrahlengang eines die scannende und entscannende Mikroskopbaugruppe (3) und ein Objektiv (2) umfassenden Laserscanningmikroskops (1) angeordnet wird/werden, wobei optional
- der Abzweig (16) an einem Strahlteiler (18), einem Umlenkspiegel (34) oder einem Drehspiegel (13) des Scanners (12) im Hauptstrahlengang (17) des Laserscanningmikroskops (1) abgezweigt wird und/oder
- die das Beleuchtungslicht (23) in den Fokusbereich (7) in der Fokusebene (6) fokussierende Optik (27) zumindest teilweise in dem Abzweig (16) angeordnet wird.

5. Verfahren nach einem der Ansprüche 1 bis 4 zur Überprüfung der Konfokalität der scannenden und entscannenden Mikroskopbaugruppe (3) mit
- der das Beleuchtungslicht (23) bereitstellenden Lichtquelle (4),
- der das Beleuchtungslicht (23) in den Fokusbereich (7) in der Fokusebene (6) fokussierenden Optik (27),
- dem das Licht aus dem Fokusbereich (7) detektierenden Detektor (8), der die konfokal zu dem Fokusbereich (7) anzuordnende Detektionsapertur (11) aufweist, und
- dem Scanner (12) zwischen der Lichtquelle (4) und dem Detektor (8) einerseits und der Fokusebene (6) andererseits,
- wobei das Beleuchtungslicht (23) über den Scanner (12) auf den Hilfsdetektor (24) gerichtet wird und
- wobei das Hilfslicht (22) von der Hilfslichtquelle (20) über den Scanner (12) auf den Detektor (8) gerichtet wird,
**dadurch gekennzeichnet,**
- **dass** die in der Fokusebene (6) angeordnete Detektionshilfsapertur (25) des Hilfsdetektors (24) durch das Verstellen des Scanners (12) mit dem Fokusbereich (7) des Beleuchtungslichts (23) abgetastet wird, um die erste Intensitätsverteilung des von dem Hilfsdetektor (24) registrierten Beleuchtungslichts (23) über die verschiedenen Stellungen des Scanners (12) hinweg zu erfassen, und
- **dass** die Detektionsapertur (11) des Detektors (8) durch das Verstellen des Scanners (12) mit dem Hilfslicht (22), das durch die konzentrisch zu der Detektionshilfsapertur (25) in der Fokusebene (6) angeordnete Emissionshilfsapertur (21) der Hilfslichtquelle (20) austritt, abgetastet wird, um die zweite Intensitätsverteilung des von dem Detektor (8) registrierten Hilfslichts (22) über die Stellungen des Scanners (12) hinweg zu erfassen,
- wobei die Detektionshilfsapertur (25) des Hilfsdetektors (24) und die Emissionshilfsapertur (21) der Hilfslichtquelle (20) optional in der Fokusebene (6) deckungsgleich sind.

6. Verfahren nach Anspruch 5, **dadurch gekennzeichnet, dass** als die Hilfslichtquelle (20) und als der Hilfsdetektor (24) dasselbe photoelektrische Bauteil (19) verwendet wird, wobei das photoelektrische Bauteil (19) optional eine Leuchtdiode (50), eine Superlumineszenzdiode, eine Laserdiode (43) oder eine Fotodiode (42) ist.

7. Verfahren nach Anspruch 5, **dadurch gekennzeichnet, dass** die Detektionshilfsapertur (25) des Hilfsdetektors (24) und die Emissionshilfsapertur (21) der Hilfslichtquelle (20) mit einem in der Fokusebene (6) angeordneten Endquerschnitt (39) eines Lichtleiters (40) ausgebildet werden, wobei der Lichtleiter (40) optional über einen Freistrahl-Strahlteiler, einen Faserstrahlteiler oder einen Zirkulator (41) zu der Hilfslichtquelle (20) und dem Hilfsdetektor (24) verzweigt ist.

8. Vorrichtung (37) zur Durchführung des Verfahrens nach einem der Ansprüche 5 bis 7, mit einem Hilfsdetektor (24) und einer Hilfslichtquelle (20), **gekennzeichnet durch** einen zu einem genormten Anschluss (36) der scannenden und entscannenden Mikroskopbaugruppe (3) oder eines die scannende und entscannende Mikroskopbaugruppe (3) und ein Objektiv (2) umfassenden Laserscanningmikroskops (1) derart passenden Gegenanschluss (38), dass eine Detektionshilfsapertur (25) des Hilfsdetektors (24) und eine Emissionshilfsapertur (21) der Hilfslichtquelle (20), deren Lagen gegenüber dem Gegenanschluss (38) fest sind, bei an den Anschluss (36) angeschlossenem Gegenanschluss (38) in der Fokusebene (6) der scannenden und entscannenden Mikroskopbaugruppe (3) angeordnet sind.

9. Scannende und entscannende Mikroskopbaugruppe (3) zur Durchführung des Verfahrens nach einem der Ansprüche 1 bis 7 mit
- einer Beleuchtungslicht (23) bereitstellenden Lichtquelle (4), wobei das Beleuchtungslicht (23) aus einer Emissionsapertur (65) der Lichtquelle (4) austritt,
- einer das Beleuchtungslicht (23) in einen Fokusbereich (7) in einer Fokusebene (6) fokussierenden Optik (27),
- einem Detektor (8) für Licht aus dem Fokusbereich (7), der eine konfokal zu dem Fokusbereich (7) anzuordnende Detektionsapertur (11) aufweist,
- einem Scanner (12) zwischen der Lichtquelle (4) und dem Detektor (8) einerseits und der Fokusebene (6) andererseits,
- einem Hilfsdetektor (24, 24') mit einer Detektionshilfsapertur (25, 25') und einer Hilfslicht (22) bereitstellenden Hilfslichtquelle (20, 20') mit einer Emissionshilfsapertur (21, 21') aus der das Hilfslicht (22, 22') austritt,
- wobei der Hilfsdetektor (24) und/oder die Hilfslichtquelle (20) in der Fokusebene (6) angeordnet ist/ sind, wobei dann, wenn der Hilfsdetektor (24) und die Hilfslichtquelle (20) in der Fokusebene angeordnet sind, die Detektionshilfsapertur (25) und die Emissionshilfsapertur (21) konzentrisch angeordnet sind,
- wobei durch Verstellen des Scanners (12) die Detektionshilfsapertur (25) des Hilfsdetektors (24) in der Fokusebene (6) mit dem Fokusbereich (7) des Beleuchtungslichts (23) oder eine konzentrisch zu der Emissionsapertur (65) der Lichtquelle (4) angeordnete Detektionshilfsapertur (25') eines separaten Hilfsdetektors (24') mit dem Hilfslicht (22), das durch die in der Fokusebene (6) angeordnete Emissionshilfsapertur (21) der Hilfslichtquelle (20) austritt, abtastbar ist und
- wobei durch Verstellen des Scanners (12) die Detektionsapertur (11) des Detektors (8) mit dem Hilfslicht (22), das in der Fokusebene (6) aus der Emissionshilfsapertur (21) der Hilfslichtquelle (20) austritt, oder die in der Fokusebene (6) angeordnete Detektionshilfsapertur (25) des Hilfsdetektors (24) mit Hilfslicht (22'), das durch eine konzentrisch zu der Detektionsapertur (11) angeordnete Emissionshilfsapertur (21') einer separaten Hilfslichtquelle (20') austritt, abtastbar ist.

10. Mikroskopbaugruppe (3) nach Anspruch 9, **gekennzeichnet durch** eine Überprüfungseinrichtung (61), die dazu ausgebildet ist,
- durch Verstellen des Scanners (12) die Detektionshilfsapertur (25) des Hilfsdetektors (24) in der Fokusebene (6) mit dem Fokusbereich (7) des Beleuchtungslichts (23) oder die konzentrisch zu der Emissionsapertur (65) der Lichtquelle (4) angeordnete Detektionshilfsapertur (25') des separaten Hilfsdetektors (24') mit dem Hilfslicht (22) von der Hilfslichtquelle (20) in der Fokusebene (6) abzutasten und eine erste Intensitätsverteilung des von dem Hilfsdetektor (24) registrierten Beleuchtungslichts (23) oder des von dem separaten Hilfsdetektor (24') registrierten Hilfslichts (22) über verschiedene Stellungen des Scanners (12) hinweg zu erfassen,
- durch Verstellen des Scanners (12) die Detektionsapertur (11) des Detektors (8) mit dem Hilfslicht (22) von der Hilfslichtquelle (20) in der Fokusebene (6) oder die in der Fokusebene (6) angeordnete Detektionshilfsapertur (25) des Hilfsdetektors (24) mit dem aus der konzentrisch zu der Detektionsapertur (11) des Detektors (8) angeordneten Emissionshilfsapertur (21') der separaten Hilfslichtquelle (20') austretenden Hilfslicht (22') abzutasten und eine zweite Intensitätsverteilung des von dem Detektor (8) registrierten Hilfslichts (22) oder des von dem Hilfsdetektor (24) registrierten Hilfslichts (22') über die Stellungen des Scanners (12) hinweg zu erfassen, und
- mindestens einen Unterschied zwischen der ersten Intensitätsverteilung und der zweiten Intensitätsverteilung über die verschiedenen Stellungen des Scanners (12) hinweg als Maß für einen Fehler der Konfokalität zu erfassen,
- wobei die Überprüfungseinrichtung (61) optional dazu ausgebildet ist, den mindestens einen Unterschied durch eine reale und oder virtuelle Relativverlagerung der Detektionsapertur (11) des Detektors (8) gegenüber der Lichtquelle (4) automatisch zu kompensieren.

11. Mikroskopbaugruppe (3) nach Anspruch 10, **dadurch gekennzeichnet, dass** soweit vorhanden die Detektionshilfsapertur (25, 25') des Hilfsdetektors (24) und des separaten Hilfsdetektors (24') und die Emissionshilfsapertur (21, 21') der Hilfslichtquelle (20) und der separaten Hilfslichtquelle (20'), und optional soweit vorhanden die Hilfslichtquelle (20) und die separate Hilfslichtquelle (20') sowie der Hilfsdetektor (24) und der separate Hilfsdetektor (24'), in einem Gehäuse der Mikroskopbaugruppe (3) angeordnet sind.

12. Mikroskopbaugruppe (3) nach einem der Ansprüche 9 bis 11 zur Durchführung des Verfahrens nach einem der Ansprüche 5 bis 8 mit
- der das Beleuchtungslicht (23) bereitstellenden Lichtquelle (4),
- der das Beleuchtungslicht (23) in den Fokusbereich (7) in der Fokusebene (6) fokussierenden Optik (27),
- dem Detektor (8) für das Licht aus dem Fokusbereich (7), der die konfokal zu dem Fokusbereich (7) anzuordnende Detektionsapertur (11) aufweist,
- dem Scanner (12) zwischen der Lichtquelle (4) und dem Detektor (8) einerseits und der Fokusebene (6) andererseits,
- dem Hilfsdetektor (24), auf den das Beleuchtungslicht (23) über den Scanner (12) richtbar ist, und
- der das Hilfslicht (22) bereitstellenden Hilfslichtquelle (20), deren Hilfslicht (22) über den Scanner (12) auf den Detektor (8) richtbar ist,
**dadurch gekennzeichnet, dass** die Detektionshilfsapertur (25) des Hilfsdetektors (24) und die Emissionshilfsapertur (21), durch die das Hilfslicht (22) von der Hilfslichtquelle (20) austritt, derart konzentrisch in der Fokusebene (6) angeordnet sind, dass die Detektionshilfsapertur (25) durch Verstellen des Scanners (12) mit dem Fokusbereich (7) des Beleuchtungslichts (23) abtastbar ist und die Detektionsapertur (11) des Detektors (8) durch Verstellen des Scanners (12) mit dem Hilfslicht (22) von der Hilfslichtquelle (20) abtastbar ist.

13. Vorrichtung nach Anspruch 8 oder Mikroskopbaugruppe (3) nach Anspruch 12, **dadurch gekennzeichnet,**
- **dass** die Hilfslichtquelle (20) und der Hilfsdetektor (24) dasselbe photoelektrische Bauteil (19) sind, wobei das photoelektrische Bauteil (19) optional eine Leuchtdiode (50), eine Superlumineszenzdiode, eine Laserdiode (43) oder eine Fotodiode (42) ist, oder
- **dass** die Detektionshilfsapertur (25) des Hilfsdetektors (24) und die Emissionshilfsapertur (21) der Hilfslichtquelle (20) mit einem in der Fokusebene (6) angeordneten Endquerschnitt (39) eines Lichtleiters (40) ausgebildet sind, wobei der Lichtleiter (40) optional über einen Freistrahl-Strahlteiler, einen Faserstrahlteiler oder einen Zirkulator (41) zu der Hilfslichtquelle (20) und dem Hilfsdetektor (24) verzweigt ist.

14. Laserscanningmikroskop mit einem Objektiv und einer scannenden und entscannenden Mikroskopbaugruppe (3) nach einem der Ansprüche 9 bis 13.

15. Laserscanningmikroskop nach Anspruch 14, **dadurch gekennzeichnet,**
- **dass** die Detektionshilfsapertur (25) des Hilfsdetektors (24) und/oder die Emissionshilfsapertur (21) der Hilfslichtquelle (20) in einer Zwischenbildebene (34) des Laserscanningmikroskops (1) angeordnet sind oder
- **dass** die Detektionshilfsapertur (25) des Hilfsdetektors (24) und/oder die Emissionshilfsapertur (21) der Hilfslichtquelle (20) in einem Abzweig (16) von einem Hauptstrahlengang (17) des Laserscanningmikroskops (1) angeordnet sind, wobei optional
- der Abzweig (16) an einem Strahlteiler (18), einem Umlenkspiegel (34) oder einem Drehspiegel (13) des Scanners (12) im Hauptstrahlengang des Laserscanningmikroskops (1) abzweigt und/oder
- die das Beleuchtungslicht (23) in den Fokusbereich (7) in der Fokusebene (6) fokussierende Optik (27) zumindest teilweise in dem Abzweig (16) angeordnet ist.

## Claims

1. Method of checking the confocality of a scanning and descanning microscope assembly (3) comprising
- a light source (4) providing illumination light (23), wherein the illumination light (23) exits out of an emission aperture (65) of the light source (4),
- an optical device (27) focusing the illumination light (23) into a focal area (7) in a focal plane (6),
- a detector (8) detecting light coming out of the focal area (7) and having a detection aperture (11) to be arranged in a confocal fashion with respect to the focal area (7),
- a scanner (12) between the light source (4) and the detector (8) on one side, and the focal plane (6) on the other side, and
- wherein an auxiliary detector (24) having an auxiliary detection aperture (25) and/or an auxiliary light source (20) providing auxiliary light (22) and having an auxiliary emission aperture (21) out of which the auxiliary light (22) exits is/are arranged in the focal plane (6), wherein, in case that both the auxiliary detector (24) and the auxiliary light source (20) are arranged in the focal plane (6), the auxiliary detection aperture (25) and the auxiliary emission aperture (21) are concentrically arranged in the focal plane (6),
- wherein the auxiliary detection aperture (25) of the auxiliary detector (24) arranged in the focal plane (6) is scanned with the focal area (7) of the illumination light (23) by operating the scanner, wherein a first intensity distribution of the illumination light (23) registered by the auxiliary detector (24) is recorded over different settings of the scanner (12), or an auxiliary detection aperture (25') of a separate auxiliary detector (24') which is arranged concentrically with respect to the emission aperture (65) of the light source (4) is scanned with the auxiliary light (22) that exits out of the auxiliary emission aperture (21) of the auxiliary light source (20) arranged in the focal plane (6) by operating the scanner (12), wherein a first intensity distribution of the illumination light (23) registered by the separate auxiliary detector (24') is recorded over different settings of the scanner (12),
- wherein the detection aperture (11) of the detector (8) is scanned with the auxiliary light (22) which exits out of the auxiliary emission aperture (21) of the auxiliary light source (20) arranged in the focal plane (6) by operating the scanner (12), wherein a second intensity distribution of the auxiliary light (22) registered by the detector (8) is recorded over the settings of the scanner (12), or the auxiliary detection aperture (25) of the auxiliary detector (24) arranged in the focal plane (6) is scanned with auxiliary light (22') which exits out of an auxiliary emission aperture (21') of a separate auxiliary light source (20') concentrically arranged with respect to the detection aperture (11) by operating the scanner (12), wherein a second intensity distribution of the auxiliary light (22') registered by the auxiliary detector (24) is recorded over the settings of the scanner (12), and
- wherein at least one difference between the first intensity distribution and the second intensity distribution over the different settings of the scanner (12) is determined as a measure of an error of the confocality.

2. Method of claim 1, **characterized in that** the at least one difference is a difference in position between maxima or centers of intensity of the first intensity distribution and the second intensity distribution.

3. Method of any of the preceding claims, **characterized in that** the at least one difference is compensated by a real or virtual relative movement of the detection aperture (11) of the detector (8) with respect to the light source (4).

4. Method of any of the preceding claims, **characterized in**
- **that** the auxiliary detection aperture (25) and/or the auxiliary emission aperture (21) which is/are arranged in the focal plane is/are arranged in an intermediate image plane of a laser-scanning microscope including the scanning and descanning microscope assembly (3) and an objective lens (2), or
- **that** the auxiliary detection aperture (25) and/or the auxiliary emission aperture (21) which is/are arranged in the focal plane is/are arranged in a branch branching off a main beam path of a laser-scanning microscope (1) including the scanning and descanning microscope assembly (3) and an objective lens (2), wherein, optionally,
- the branch (16) branches off at a beam splitter (18), a deflection mirror (34) or a rotating mirror (13) of the scanner (12) in the main beam path (17) of the laser-scanning microscope (1), and/or
- the optical device (27) focusing the illumination light (23) into the focal area (7) in the focal plane (6) is at least partially arranged within the branch (16).

5. Method of any of the claims 1 to 4 of checking the confocality of the scanning and descanning microscope assembly (3) comprising
- the light source (4) providing the illumination light (23),
- the optical device (27) focusing the illumination light (23) into the focal area (7) in the focal plane (6),
- the detector (8) detecting the light coming out of the focal area (7) and having the detection aperture (11) to be arranged in a confocal fashion with respect to the focal area (7), and
- the scanner (12) between the light source (4) and the detector (8) on one side, and the focal plane (6) on the other side,
- wherein the illumination light (23) is directed onto the auxiliary detector (24) via the scanner (12), and
- wherein the auxiliary light (22) from the auxiliary light source (20) is directed onto the detector (8) via the scanner (12),
**characterized in**
- **that** the auxiliary detection aperture (25) of the auxiliary detector (24) arranged in the focal plane (6) is scanned with the focal area (7) of the illumination light (23) by operating the scanner (12) to record the first intensity distribution of the illumination light (23) registered by the auxiliary detector (24) over the different settings of the scanner (12) and
- **that** the detection aperture (11) of the detector (8) is scanned with the auxiliary light (22) that exits out of the auxiliary emission aperture (21) of the auxiliary light source (20) concentrically arranged with respect to the auxiliary detection aperture (25) in the focal plane (6) by operating the scanner (12) to record the second intensity distribution of the auxiliary light (22) registered by the detector (8) over the settings of the scanner (12),
- wherein the auxiliary detection aperture (25) of the auxiliary detector (24) and the auxiliary emission aperture (21) of the auxiliary light source (20) are optionally congruent in the focal plane (6).

6. Method of claim 5, **characterized in that** a same photoelectric component (19) is used both as the auxiliary light source (20) and as the auxiliary detector (24), wherein the photoelectric component (19), optionally, is a light emitting diode (50), a super-luminescence diode, a laser diode (43) or a photodiode (42).

7. Method of claim 5, **characterized in that** the auxiliary detection aperture (25) of the auxiliary detector (24) and the auxiliary emission aperture (21) of the auxiliary light source (20) are formed by a terminal cross-section (39) of an optical fiber (40) arranged in the focal plane (6), wherein the optical fiber (40), optionally via a free beam-beam splitter, a fiber beam splitter or a circulator (41), is branched towards the auxiliary light source (20) and the auxiliary detector (24).

8. Apparatus (37) for carrying out the method of any of the claims 5 to 7, comprising an auxiliary detector (24) and an auxiliary light source (20), **characterized by** a counter-connector fitting to a normalized connector (36) of the scanning and descanning microscope assembly (3) or of a laser-scanning microscope (1) including the scanning and descanning microscope assembly (3) and an objective lens (2) in such a way that an auxiliary detection aperture (25) of the auxiliary detector (24) and an auxiliary emission aperture (21) of the auxiliary light source (20) whose positions are fixed with respect to the counter-connector (38) are arranged in the focal plane (6) of the scanning and descanning microscope assembly (3) with the counter-connector (38) being connected to the connector (36).

9. Scanning and descanning microscope assembly (3) for carrying out the method of any of the claims 1 to 7 comprising
- a light source (4) providing illumination light (23), wherein the illumination light (23) exits out of an emission aperture (65) of the light source (4),
- an optical device (27) focusing the illumination light (23) into a focal area (7) in a focal plane (6),
- a detector (8) for light coming out of the focal area (7) and having a detection aperture (11) to be arranged in a confocal fashion with respect to the focal area (7),
- a scanner (12) arranged between the light source (4) and the detector (8) on one side, and the focal plane (6) on the other side, and
- an auxiliary detector (24, 14') having an auxiliary detection aperture (25, 25') and an auxiliary light source (20, 20') providing auxiliary light (22, 22') and having an auxiliary emission aperture (21, 21') out of which the auxiliary light (22, 22') exits,
- wherein the auxiliary detector (24) and/or the auxiliary light source (20) are arranged in the focal plane in the focal plane (6), wherein, in case that both the auxiliary detector (24) and the auxiliary light source (20) are arranged in the focal plane, the auxiliary detection aperture (25) and the auxiliary emission aperture (21) are arranged concentrically,
- wherein the auxiliary detection aperture (25) of the auxiliary detector (24) in the focal plane (6) is scannable with the focal area (7) of the illumination light (23) or an auxiliary detection aperture (25') of a separate auxiliary detector (24') concentrically arranged with respect to the emission aperture (65) of the light source (4) is scannable with the auxiliary light (22) that exits out of the auxiliary emission aperture (21) of the auxiliary light source (20) arranged in the focal plane (6) by operating the scanner (12), and
- wherein the detection aperture (11) of the detector (8) is scannable with the auxiliary light (22) which exits in the focal plane (6) out of the auxiliary emission aperture (21) of the auxiliary light source (20), or the auxiliary detection aperture (25) of the auxiliary detector (24) arranged in the focal plane (6) is scannable with auxiliary light (22') which exits through an auxiliary emission aperture (21') of a separate auxiliary light source (20') concentrically arranged with respect to the detection aperture (11) by operating the scanner (12).

10. Microscope assembly (3) of claim 9, **characterized by** a checking device (61) configured for
- scanning the auxiliary detection aperture (25) of the auxiliary detector (24) in the focal plane (6) with the focal area (7) of the illumination light (23) or the auxiliary detection aperture (25') of the separate auxiliary detector (24') concentrically arranged with respect to the emission aperture (65) of the light source (4) with the auxiliary light (22) from the auxiliary light source (20) in the focal plane (6) by operating the scanner and recording a first intensity distribution of the illumination light (23) registered by the auxiliary detector (24) or the auxiliary light (22) registered by the separate auxiliary detector (24') over different settings of the scanner (12),
- scanning the detection aperture (11) of the detector (8) with the auxiliary light (22) from the auxiliary light source (20) in the focal plane (6) or the auxiliary detection aperture (25) of the auxiliary detector (24) arranged in the focal plane (6) with the auxiliary light (22') exiting out of the auxiliary emission aperture (21') of the separate auxiliary light source (20') concentrically arranged with respect to the detection aperture (11) of the detector (8) by operating the scanner and recording a second intensity distribution of the auxiliary light (22) registered by the detector (8) or of the auxiliary light (22') registered by the auxiliary detector (24) over the settings of the scanner (12), and
- determining at least one difference between the first intensity distribution and the second intensity distribution over the different settings of the scanner (12) as a measure of an error of the confocality,
- wherein the checking device (61) is optionally configured for automatically compensating the at least one difference by a real or virtual relative movement of the detection aperture (11) of the detector (8) with respect to the light source (4).

11. Microscope assembly (3) of claim 10, **characterized in that**, if present, the auxiliary detection apertures (25, 25') of the auxiliary detector (24) and the separate auxiliary detector (24') and the auxiliary emission apertures (21, 21') of the auxiliary light source (20) and the separate auxiliary light source (20'), and, optionally, if present, the auxiliary light source (20) and the separate auxiliary light source (20') as well as the auxiliary detector (24) and the separate auxiliary detector (24') are arranged in a housing of the microscope assembly (3).

12. Microscope assembly (3) of any of the claims 9 to 11 for carrying out the method of any of the claims 5 to 8, comprising
- the light source (4) providing the illumination light (23),
- the optical device (27) focusing the illumination light (23) in the focal area (7) in the focal plane (6),
- the detector (8) for the light coming out of the focal area (7) and having the detection aperture to be arranged in a confocal fashion with respect to the focal area (7),
- the scanner (12) between the light source (4) and the detector (8) on one side, and the focal plane (6) on the other side,
- the auxiliary detector (24) onto which the auxiliary light (23) is directable via the scanner (12), and
- the auxiliary light source (20) providing the auxiliary light (22) whose auxiliary light (22) is directable onto the detector (8) via the scanner (12),
**characterized in that** the auxiliary detection aperture (25) of the auxiliary detector (24) and the auxiliary emission aperture (21) out of which the auxiliary light (22) from the auxiliary light source (20) exits are concentrically arranged in the focal plane (6) in such a way that the auxiliary detection aperture (25) is scannable with the focal area (7) of the illumination light (23) by operating the scanner (12) and the detection aperture (11) of the detector (8) is scannable with the auxiliary light (22) from the auxiliary light source (20) by operating the scanner (12).

13. Apparatus of claim 8 or microscope assembly (3) of claim 12, **characterized in**
- **that** the auxiliary light source (20) and the auxiliary detector (24) are a same photoelectrical component (19), wherein the photoelectrical component (19), optionally, is a light emitting diode (50), a super-luminescence diode, a laser diode (43) or a photodiode (42), or
- **that** the auxiliary detection aperture (25) of the auxiliary detector (24) and the auxiliary emission aperture (21) of the auxiliary light source (20) are formed by a terminal cross-section (39) of an optical fiber (40) arranged in the focal plane (6), wherein the optical fiber (40), optionally via a free beam-beam splitter, a fiber beam splitter or a circulator (41), is branched towards the auxiliary light source (20) and the auxiliary detector (24).

14. Laser-scanning microscope comprising an objective and a scanning and descanning microscope assembly (3) of any of the claims 9 to 13.

15. Laser-scanning microscope of claim 14, **characterized in**
- **that** the auxiliary detection aperture (25) of the auxiliary detector (24) and/or the auxiliary emission aperture (21) of the auxiliary light source (20) are arranged in an intermediate image plane (34) of the laser-scanning microscope (1) or
- **that** the auxiliary detection aperture (25) of the auxiliary detector (24) and/or the auxiliary emission aperture (21) of the auxiliary light source (20) is/are arranged in a branch (16) branching off a main beam path (17) of the laser-scanning microscope (1), wherein, optionally,
- the branch (16) branches off at a beam splitter (18), a deflection mirror (37) or a rotating mirror (13) of the scanner (12) in the main beam path of the laser-scanning microscope (1) and/or
- the optical device (27) focusing the illumination light (23) into the focal area (7) in the focal plane (6) is at least partially arranged within the branch (16).

## Revendications

1. Procédé pour le test de la confocalité d'un module de balayage et de débalayage d'un microscope (3) avec
- une source de lumière (4) émettant une lumière d'éclairage (23), dans lequel la lumière d'éclairage (23) sort d'une ouverture d'émission (65) de la source de lumière (4),
- une optique (27) focalisant la lumière d'éclairage (23) dans une zone de focalisation (7) dans un plan de focalisation (6),
- un détecteur (8) détectant la lumière provenant de la zone de focalisation (7), qui comprend une ouverture de détection (11) à disposer de manière confocale par rapport à la zone de focalisation (7),
- un scanner (12) entre la source de lumière (4) et le détecteur (8) d'une part et le plan de focalisation (6) d'autre part et
- dans lequel un détecteur auxiliaire (24) avec une ouverture auxiliaire de détection (25) et/ou une source de lumière auxiliaire (20) émettant une lumière auxiliaire (22), avec une ouverture auxiliaire d'émission (21) par laquelle sort la lumière auxiliaire (22), est/sont disposé(s) dans le plan de focalisation (6), dans lequel, lorsque le détecteur auxiliaire (24) et la source de lumière auxiliaire (20) sont disposés dans le plan de focalisation (6), l'ouverture auxiliaire de détection (25) et l'ouverture auxiliaire d'émission (21) sont disposées de manière concentrique dans le plan de focalisation (6),
- dans lequel l'ouverture auxiliaire de détection (25) du détecteur auxiliaire (24), disposée dans le plan de focalisation (6), est balayée grâce au déplacement du scanner (12) avec la zone de focalisation (7) de la lumière d'éclairage (23), dans lequel une première distribution d'intensité de la lumière d'éclairage (23) enregistrée par le détecteur auxiliaire (24) est mesurée à différentes positions du scanner (12), ou une ouverture auxiliaire de détection (25') d'un détecteur auxiliaire séparé (24'), disposée de manière concentrique par rapport à l'ouverture d'émission (65) de la source de lumière (4), est balayée grâce au déplacement du scanner (12) avec la lumière auxiliaire (22) qui sort par l'ouverture auxiliaire d'émission (21) de la source de lumière auxiliaire (20), disposée dans le plan de focalisation (6), dans lequel une première distribution d'intensité de la lumière d'éclairage (23) enregistrée par le détecteur auxiliaire séparé (24') est mesurée à différentes positions du scanner (12),
- dans lequel l'ouverture de détection (11) du détecteur (8) est balayée grâce au déplacement du scanner (12) avec la lumière auxiliaire (22) qui sort par l'ouverture auxiliaire d'émission (21) de la source de lumière auxiliaire (20), disposée dans le plan de focalisation (6), dans lequel une deuxième distribution d'intensité de la lumière auxiliaire (22) enregistrée par le détecteur (8) est mesurée au niveau des positions du scanner (12) ou l'ouverture auxiliaire de détection (25) du détecteur auxiliaire (24), disposée dans le plan de focalisation (6), est balayée grâce au déplacement du scanner (12) avec la lumière auxiliaire (22') qui sort par une ouverture auxiliaire d'émission (21') d'une source de lumière auxiliaire séparée (20'), disposée de manière concentrique par rapport à l'ouverture de détection (11), dans lequel une deuxième distribution d'intensité de la lumière auxiliaire (22) enregistrée par le détecteur auxiliaire (24) est mesurée au niveau des positions du scanner (12) et
- dans lequel au moins une différence entre la première distribution d'intensité et la deuxième différence d'intensité au niveau des différentes positions du scanner (12) est mesurée en tant qu'indication d'un défaut de confocalité.

2. Procédé selon la revendication 1, **caractérisé en ce que** l'au moins une différence est une différence de position entre des maxima ou centres de gravité de la première distribution d'intensité et de la deuxième distribution d'intensité.

3. Procédé selon l'une des revendications précédentes, **caractérisé en ce que** l'au moins une différence est compensée par un déplacement relatif réel ou virtuel de l'ouverture de détection (11) du détecteur (8) par rapport à la source de lumière (4).

4. Procédé selon l'une des revendications précédentes, **caractérisé en ce que**
- l'ouverture auxiliaire de détection (25) et/ou l'ouverture auxiliaire d'émission (21), qui est/sont disposée(s) dans le plan de focalisation, sont disposée(s) dans un plan d'image intermédiaire d'un microscope à balayage laser comprenant le module de balayage et de débalayage de microscope (3) et un objectif (2) ou
- l'ouverture auxiliaire de détection (25) et/ou l'ouverture auxiliaire d'émission (21), qui est/sont disposée(s) dans le plan de focalisation, est/sont disposée(s) dans un embranchement d'un trajet de faisceau principal d'un microscope à balayage laser (1) comprenant le module de balayage et de débalayage de microscope (3) et un objectif (2), dans lequel, en option,
- l'embranchement (16) bifurque au niveau d'un diviseur de faisceau (18), d'un miroir de déviation (34) ou d'un miroir rotatif (13) du scanner (12) dans le trajet de faisceau principal (17) du microscope à balayage laser (1) et/ou
- l'optique (27) focalisant la lumière d'éclairage (23) dans la zone de focalisation (7) dans le plan de focalisation (6) est disposée au moins partiellement dans l'embranchement (16).

5. Procédé selon l'une des revendications 1 à 4 pour le test de la confocalité du module de balayage et de débalayage de microscope (3) avec
- la source de lumière (4) émettant la lumière d'éclairage (23),
- l'optique (27) focalisant la lumière d'éclairage (23) dans la zone de focalisation (7) dans le plan de focalisation (6),
- le détecteur (8) détectant la lumière provenant de la zone de focalisation (7), qui comprend l'ouverture de détection (11) à disposer de manière confocale par rapport à la zone de focalisation (7) et
- le scanner (12) entre la source de lumière (4) et le détecteur (8) d'une part et le plan de focalisation (6) d'autre part,
- dans lequel la lumière d'éclairage (23) est orientée par le scanner (12) vers le détecteur auxiliaire (24) et
- dans lequel la lumière auxiliaire (22) provenant de la source de lumière auxiliaire (20) par le scanner (12) vers le détecteur (8),
**caractérisé en ce que**
- l'ouverture auxiliaire de détection (25) du détecteur auxiliaire (24), disposée dans le plan de focalisation (6), est balayée grâce au déplacement du scanner (12) avec la zone de focalisation (7) de la lumière d'éclairage (23), afin de mesurer la première distribution d'intensité de la lumière d'éclairage (23) enregistrée par le détecteur auxiliaire (24) aux différentes positions du scanner (12) et
- l'ouverture de détection (11) du détecteur (8) est balayée grâce au déplacement du scanner (12) avec la lumière auxiliaire (22) qui sort par l'ouverture auxiliaire d'émission (21) de la source de lumière auxiliaire (20), disposée dans le plan de focalisation (6), afin de mesurer la deuxième distribution d'intensité de la lumière auxiliaire (22) enregistrée par le détecteur (8) au niveau des positions du scanner (12),
- dans lequel l'ouverture auxiliaire de détection (25) du détecteur auxiliaire (24) et l'ouverture auxiliaire d'émission (21) de la source de lumière auxiliaire (20) sont, en option, coextensives dans le plan de focalisation (6).

6. Procédé selon la revendication 5, **caractérisé en ce que**, pour la source de lumière auxiliaire (20) et pour le détecteur auxiliaire (24), on utilise le même composant photoélectrique (19), dans lequel le composant photoélectrique (19) est, en option, une diode électroluminescente (50), une diode superluminescente, une diode laser (43) ou une photodiode (42).

7. Procédé selon la revendication 5, **caractérisé en ce que** l'ouverture auxiliaire de détection (25) du détecteur auxiliaire (24) et l'ouverture auxiliaire d'émission (21) de la source de lumière auxiliaire (20) sont réalisées avec une section transversale (39) d'une fibre optique (40) disposée dans le plan de focalisation (6), dans lequel la fibre optique (40) bifurque, en option, par l'intermédiaire d'un diviseur de faisceau à faisceau libre, d'un diviseur de faisceau à fibre ou d'un circulateur (41) vers la source de lumière auxiliaire (20) et le détecteur auxiliaire (24).

8. Dispositif (37) pour l'exécution du procédé selon l'une des revendications 5 à 7, avec un détecteur auxiliaire (24) et une source de lumière auxiliaire (20), **caractérisé par** un contre-raccord (38), adapté à un raccord normalisé (36) du module de balayage et de débalayage de microscope (3) ou d'un microscope à balayage laser (1) comprenant le module de balayage et de débalayage de microscope (3) et un objectif (2), de façon à ce qu'une ouverture auxiliaire de détection (25) du détecteur auxiliaire (24) et une ouverture auxiliaire d'émission (21) de la source de lumière auxiliaire (20), dont les positions par rapport au contre-raccord (38) sont fixes, soient disposées, lorsque le contre-raccord (38) est relié au raccord (36), dans le plan de focalisation (6) du module de balayage et de débalayage de microscope (3).

9. Module de balayage et de débalayage de microscope (3) pour l'exécution du procédé selon l'une des revendications 1 à 7 avec
- une source de lumière (4) émettant une lumière d'éclairage (23), dans lequel la lumière d'éclairage (23) sort d'une ouverture d'émission (65) de la source de lumière (4),
- une optique (27) focalisant la lumière d'éclairage (23) dans une zone de focalisation (7) dans un plan de focalisation (6),
- un détecteur (8) pour une lumière provenant de la zone de focalisation (7), qui comprend une ouverture de détection (11) à disposer de manière confocale par rapport à la zone de focalisation (7),
- un scanner (12) entre la source de lumière (4) et le détecteur (8) d'une part et le plan de focalisation (6) d'autre part,
- un détecteur auxiliaire (24, 24') avec une ouverture auxiliaire de détection (25, 25') et une source de lumière auxiliaire (20, 20') émettant une lumière auxiliaire (22), avec une ouverture auxiliaire d'émission (21, 21') de laquelle sort la lumière auxiliaire (22, 22'),
- dans lequel le détecteur auxiliaire (24) et/ou la source de lumière auxiliaire (20) est/sont disposé(s) dans le plan de focalisation (6), dans lequel, lorsque le détecteur auxiliaire (24) et la source de lumière auxiliaire (20) sont disposées dans le plan de focalisation, l'ouverture auxiliaire de détection (25) et l'ouverture auxiliaire d'émission (21) sont disposées de manière concentrique,
- dans lequel, grâce au déplacement du scanner (12), l'ouverture auxiliaire de détection (25) du détecteur auxiliaire (24) dans le plan de focalisation (6) avec la zone de focalisation (7) de la lumière d'éclairage (23) ou une ouverture auxiliaire de détection (25') d'un détecteur auxiliaire séparé (24'), disposée de manière concentrique par rapport à l'ouverture d'émission (65) de la source de lumière (4), peut être balayée avec la lumière auxiliaire (22) qui sort par l'ouverture auxiliaire d'émission (21) de la source de lumière auxiliaire (20), disposée dans le plan de focalisation (6) et
- dans lequel, grâce au déplacement du scanner (12), l'ouverture de détection (11) du détecteur (8) peut être balayée avec la lumière auxiliaire (22) qui sort dans le plan de focalisation (6) de l'ouverture auxiliaire d'émission (21) de la source de lumière auxiliaire (20) ou l'ouverture auxiliaire de détection (25) du détecteur auxiliaire (24), disposée dans le plan de focalisation (6), peut être balayée avec la lumière auxiliaire (22') qui sort par une ouverture auxiliaire d'émission (21') d'une source de lumière auxiliaire séparée (20'), disposée de manière concentrique par rapport à l'ouverture de détection (11).

10. Module de microscope (3) selon la revendication 9, **caractérisé par** un dispositif de test (61) qui est conçu pour
- balayer, grâce au déplacement du scanner (12), l'ouverture auxiliaire de détection (25) du détecteur auxiliaire (24) dans le plan de focalisation (6) avec la zone de focalisation (7) de la lumière d'éclairage (23) ou l'ouverture auxiliaire de détection (25') du détecteur auxiliaire séparé (24'), disposée de manière concentrique par rapport à l'ouverture d'émission (65) de la source de lumière (4), avec la lumière auxiliaire (22) provenant de la source de lumière auxiliaire (20) dans le plan de focalisation (6) et mesurer une première distribution d'intensité de la lumière d'éclairage (23) enregistrée par le détecteur auxiliaire (24) ou de la lumière auxiliaire (22) enregistrée par le détecteur auxiliaire séparé (24') u niveau de différentes positions du scanner (12),
- balayer, grâce au déplacement du scanner (12), l'ouverture de détection (11) du détecteur (8) avec la lumière auxiliaire (22) provenant de la source de lumière auxiliaire (20) dans le plan de focalisation (6) ou l'ouverture auxiliaire de détection (25) du détecteur auxiliaire (24), disposée dans le plan de focalisation (6), avec la lumière auxiliaire (22') sortant de l'ouverture auxiliaire d'émission (21') de la source de lumière auxiliaire séparée (20'), disposée de manière concentrique par rapport à l'ouverture de détection (11) du détecteur (8), et mesurer une deuxième distribution d'intensité de la lumière auxiliaire (22) enregistrée par le détecteur (8) ou de la lumière auxiliaire (22') enregistrée par le détecteur auxiliaire (24), aux positions du scanner (12) et
- mesurer au moins une différence entre la première distribution d'intensité et la deuxième distribution d'intensité aux différentes positions du scanner (12) en tant que mesure pour un défaut de confocalité,
- dans lequel le dispositif de test (61) est conçu, en option, pour compenser automatiquement l'au moins une différence à l'aide d'un déplacement relatif réel ou virtuel de l'ouverture de détection (11) du détecteur (8) par rapport à la source de lumière (4).

11. Module de microscope (3) selon la revendication 10, **caractérisé en ce que**, si elles existent, l'ouverture auxiliaire de détection (25, 25') du détecteur auxiliaire (24) et du détecteur auxiliaire séparé (24') et l'ouverture auxiliaire d'émission (21, 21') de la source de lumière auxiliaire (20) et de la source de lumière auxiliaire séparée (20') et, en option, si elles existent, la source de lumière auxiliaire (20) et la source de lumière auxiliaire séparée (20') ainsi que le détecteur auxiliaire (24) et le détecteur auxiliaire séparé (24'), sont disposés dans un boîtier du module de microscope (3).

12. Module de microscope (3) selon l'une des revendications 9 à 11, pour l'exécution du procédé selon l'une des revendications 5 à 8 avec
- la source de lumière (4) émettant une lumière d'éclairage (23),
- l'optique (27) focalisant la lumière d'éclairage (23) dans une zone de focalisation (7) dans un plan de focalisation (6),
- le détecteur (8) pour la lumière provenant de la zone de focalisation (7), qui comprend une ouverture de détection (11) à disposer de manière confocale par rapport à la zone de focalisation (7),
- le scanner (12) entre la source de lumière (4) et le détecteur (8) d'une part et le plan de focalisation (6) d'autre part,
- le détecteur auxiliaire (24) vers lequel la lumière d'éclairage (23) peut être dirigée par le scanner (12) et
- la source de lumière auxiliaire (20) émettant la lumière auxiliaire (22), dont la lumière auxiliaire (22) peut être dirigée par le scanner (12) vers le détecteur (8),
**caractérisé en ce que** l'ouverture auxiliaire de détection (25) du détecteur auxiliaire (24) et l'ouverture auxiliaire d'émission (21) par laquelle sort la lumière auxiliaire (22) provenant de la source de lumière auxiliaire (20), sont disposées de manière concentrique dans le plan de focalisation (6) de façon à ce que l'ouverture auxiliaire de détection (25) puisse être balayée grâce au déplacement du scanner (12) avec la zone de focalisation (7) de la lumière d'éclairage (23) et à ce que l'ouverture de détection (11) du détecteur (8) puisse être balayée grâce au déplacement du scanner (12) avec la lumière auxiliaire (22) provenant de la source de lumière auxiliaire (20).

13. Dispositif selon la revendication 8 ou module de microscope (3) selon la revendication 12, **caractérisé en ce que**
- la source de lumière auxiliaire (20) et le détecteur auxiliaire (24) sont le même composant photoélectrique (19), dans lequel le composant photoélectrique (19) est, en option, une diode électroluminescente (50), une diode superluminescente, une diode laser (43) ou une photodiode (42) ou
- l'ouverture auxiliaire de détection (25) du détecteur auxiliaire (24) et l'ouverture auxiliaire d'émission (21) de la source de lumière auxiliaire (20) sont réalisées avec une section transversale d'extrémité (39) d'une fibre optique (40), disposée dans le plan de focalisation (6), dans lequel la fibre optique (40) bifurque, en option, par l'intermédiaire d'un diviseur de faisceau à faisceau libre, d'un diviseur de faisceau à fibre ou d'un circulateur (41) vers la source de lumière auxiliaire (20) et le détecteur auxiliaire (24).

14. Microscope à balayage laser avec un objectif et un module de balayage et de débalayage de microscope (3) selon l'une des revendications 9 à 13.

15. Microscope à balayage laser selon la revendication 14, **caractérisé en ce que**
- l'ouverture auxiliaire de détection (25) du détecteur auxiliaire (24) et/ou l'ouverture auxiliaire d'émission (21) de la source de lumière auxiliaire (20) sont disposées dans un plan d'image intermédiaire (34) du microscope à balayage laser (1) ou
- l'ouverture auxiliaire de détection (25) du détecteur auxiliaire (24) et/ou l'ouverture auxiliaire d'émission (21) de la source de lumière auxiliaire (20) sont disposées dans un embranchement (16) du trajet de faisceau principal (17) du microscope à balayage laser (1), dans lequel, en option
- l'embranchement (16) bifurque au niveau d'un diviseur de faisceau (18), d'un miroir de déviation (34) ou d'un miroir rotatif (13) du scanner (12) dans le trajet de faisceau principal du microscope à balayage laser (1) et/ou
- l'optique (27) focalisant la lumière d'éclairage (23) dans la zone de focalisation (7) dans le plan de focalisation (6) est disposée au moins partiellement dans l'embranchement (16).
